# EUROPÄISCHE PATENTSCHRIFT

(11) **EP 2 878 484 B1**
(45) Veröffentlichungstag und Bekanntmachung des Hinweises auf die Patenterteilung: **27.09.2017**
(21) Anmeldenummer: 13194589.1
(22) Anmeldetag: 27.11.2013
(51) Int. Cl.: B60P 3/08, B62D 7/14, B62D 13/04

(54) **Transportfahrzeug für Kraftfahrzeuge und Verfahren zu dessen Beladung**
Transport vehicle for motor vehicles and method for loading them
Véhicule de transport pour véhicules automobiles et leur procédé de chargement

(43) Veröffentlichungstag der Anmeldung: 03.06.2015
(73) Patentinhaber: Kuvvetli, Sami, 93437 Furth i. Wald (DE)
(72) Erfinder: Kuvvetli, Sami, 93437 Furth i. Wald (DE)
(74) Vertreter: Benninger, Johannes

(56) Entgegenhaltungen:
- EP-A1- 0 343 049
- EP-A1- 0 356 359
- EP-A1- 0 780 264
- EP-A1- 2 025 578
- DE-A1-102009 054 293
- DE-A1-102010 027 118
- DE-U1-202009 006 630
- JP-A- 2001 294 170
- US-B1- 6 186 266

## Beschreibung

Die vorliegende Erfindung betrifft ein Transportfahrzeug mit mindestens drei Achsen zur Beförderung von rollbaren Gütern wie Kraftfahrzeugen mit den Merkmalen des unabhängigen Anspruchs 1. Die Erfindung betrifft zudem ein Verfahren zum Beladen eines solchen Transportfahrzeugs mit den Merkmalen des unabhängigen Verfahrensanspruchs 13.

Lastkraftwagen, die für den Transport mehrerer Personenkraftfahrzeuge vorgesehen sind, sind in unterschiedlichen Ausführungsvärianten bekannt und werden meist pauschal als Autotransporter bezeichnet. Eine typische Variante solcher Transportfahrzeuge weist zwei oder drei Achsen, ein frontseitig oberhalb einer lenkbaren Vorderachse angeordnetes Führerhaus sowie einen dahinter angeordneten und/oder über das Führerhaus reichenden, mindestens zwei zumindest abschnittsweise übereinander angeordnete Auflageflächen umfassenden Transportbereich auf. Dem Transportbereich ist heckseitig eine angetriebene Hinterachse oder eine Doppel- oder Zwillingsachse zur Lastabstützung zugeordnet. Ein solches Transportfahrzeug kann auf seinen beiden Ebenen mehrere Kraftfahrzeuge laden und befördern. Weiterhin kann das Transportfahrzeug einen Anhänger ziehen, der ebenfalls zwei übereinander angeordnete Ladeebenen aufweisen kann. Eine solche Fahrzeugkonfiguration findet sich bspw. in der EP 1 661 756 B1.

Darüber hinaus sind auch Sattelzugfahrzeuge zur Beförderung von Personenkraftwagen bekannt, die einen zweistöckigen Aufliegeranhänger aufweisen können.

Die obere Auflageebene muss abgesenkt und angehoben werden können, um das Befahren mit den zu ladenden Kraftfahrzeugen zu ermöglichen. Sobald die obere Auflageebene angehoben wurde, kann die darunter liegende Auflageebene beladen und mit Kraftfahrzeugen befahren werden.

Ein solcher Heb- und Senkmechanismus für eine obere Ladeebene eines Fahrzeugtransporters geht bspw. aus der DE 2 401 670 A1 hervor. Ein ähnlicher Mechanismus ist in der US 4 061 390 A beschrieben. Ein weiterer Schwenkmechanismus findet sich in der DE 1 630 073 A1.

Eine an schwenkbaren Stützen aufgehängte obere Auflageebene eines Autotransporters, die parallelogrammartig abgesenkt werden kann, geht zudem aus der US 5 468 115 A hervor.

Des Weiteren ist mit der EP 0 780 264 A1 ein zweiachsiger Lastkraftwagen bekannt, welcher zwei übereinander liegende Bodenteile zum-Transport von Fahrzeugen aufweist. Das Führerhaus des Lastkraftwagens weist ein Chassis auf. Der Chassis ist mit einem Aufbau versehen, welcher ein ortsfestes unteres und oberes Ladedeck enthält. Das obere Ladedeck wird vom Chassis über vordere und hintere Stützen getragen. Über ein Spindelsystem können die Stützen angehoben und abgesenkt werden.

Die JP 2011 294170 A offenbart einen dreiachsigen Lastkraftwagen, der eine Vorder- und Mittel- und Hinterachse aufweist. Die Abstände der Achsen stehen in einem bestimmten Verhältnis zueinander. Über eine Steuerungseinrichtung, welche mit einem Steuerurigswinkelsensor verbunden ist, können die Mittel- und Hinterreifen zu den Vorderreifen in einem bestimmten Zeitrahmen gegensteuern. Die Hinterachse ist zudem als angetrieben Achse ausgestaltet.

Die DE 10 2009 054 293 A3 beschreibt eine Sicherheitslenkung für Nachläufer eines Langguttransporters. Der Langguttransporter setzt sich aus einem Zugfahrzeug und einem Nachläufer zusammen. Das zu transportierende Langgut liegt mit dem vorderen Ende auf einem auf der Ladefläche des Zugfahrzeugs angeordneten Drehschemel auf, und mit dem hinteren Ende auf dem Nachläufer. Sobald bei einer Kurvenfahrt die Vorderräder des Zugfahrzeugs einschlagen, dreht sich das Zugfahrzeug unter dem Drehschemel. Mit zunehmender Kurvenfahrt dreht sich auch der Drehschemel bzw. eine gelenkte Achse des Nachläufers.

Zudem offenbart die EP 0 343 049 A1 eine automatische Lenkradsteuerung für ein von einem Zugfahrzeug gezogenes Fahrzeug. Über einen Winkelmesser wird der Winkel während einer Kurvenfahrt zwischen einer Zugeinrichtung und einem gezogenen Fahrzeug angegeben. Bei der Kurvenfahrt wird ein derartiges Signal erzeugt, welches an das gezogene Fahrzeug weitergeleitet wird und einen Lenkeinschlag der Reifen des gezogenen Fahrzeugs bewirkt.

Die bekannten Fahrzeugtransporter weisen oftmals eine geringe Ladekapazität auf. Wenn sie mit Anhängern versehen sind, sind sie schwer zu rangieren und zu manövrieren. Zudem dürfen solche Lastkraftwagen normalerweise nur mit einer LKW-Fahrerlaubnis bewegt werden. Kompakte Fahrzeugtransporter, die mit einem PKW-Führerschein bewegt werden dürfen, weisen wiederum nur eine geringe Ladekapazität auf.

Das vorrangige Ziel der vorliegenden Erfindung wird darin gesehen, ein Transportfahrzeug für rollbare Güter wie Kraftfahrzeuge zur Verfügung zu stellen, das den verfügbaren Stapelplatz optimal ausschöpft, um auf diese Weise bestimmte Maximalabmessungen und Gesamtgewichte nicht zu überschreiten. Damit soll insbesondere Einschränkungen Rechnung getragen werden, die sich aus nationalen Führerscheinklassen ergeben. Ein weiteres Ziel der Erfindung besteht darin, ein optimiertes Verfahren zur effizienten und schnellen Beladung und Entladung eines solchen Transportfahrzeuges zur Verfügung zu stellen.

Diese genannten Ziele der Erfindung werden mit den Gegenständen der unabhängigen Ansprüche erreicht. Merkmale vorteilhafter Ausgestaltungen und Weiterbildungen der Erfindung werden durch die Unteransprüche beschrieben und finden sich in der nachfolgenden Beschreibung sowie der zugehörigen Zeichnung.

Die Erfindung schlägt zur Erreichung des genannten Ziels ein Transportfahrzeug mit mindestens drei Achsen mit den Merkmalen des unabhängigen Anspruchs 1 vor, das der Beförderung von rollbaren Gütern oder Fahrzeugen dient, insbesondere der Beförderung von Kraftfahrzeugen wie Personenkraftwagen o. dgl. Das erfindungsgemäße Transportfahrzeug weist ein frontseitig oberhalb einer lenkbaren Vorderachse angeordnetes Führerhaus sowie einen dahinter angeordneten und/oder über das Führerhaus reichenden, mindestens zwei zumindest abschnittsweise übereinander angeordnete Auflageflächen umfassenden Transportbereich auf. Dem Transportbereich ist heckseitig wenigstens eine lenkbare Hinterachse zur Lastabstützung zugeordnet. Außerdem ist das Transportfahrzeug mit einer angetriebenen Mittelachse ausgestattet, deren Achsabstand zur lenkbaren Vorderachse weniger als die Hälfte des Achsabstandes zur lenkbaren Hinterachse beträgt. Sinnvollerweise kann der Achsabstand zwischen der gelenkten Vorderachse und der angetriebenen Mittelachse in etwa zwei bis drei Meter betragen. Ein sinnvoller Achsabstand kann bspw. in einem Bereich von etwa 2,5 Meter liegen. Durch diese Anordnung wird ein insgesamt sehr kompaktes Transportfahrzeug zur Verfügung gestellt, das bei optimaler Rangierbarkeit und relativ geringer Gesamtlänge eine Transportkapazität für insgesamt mindestens fünf Kraftfahrzeuge zur Verfügung stellen kann. Das erfindungsgemäße Transportfahrzeug kann insbesondere für den Transport von mindestens fünf sog. SUV (Sport Utility Vehicle) bzw. von mindestens fünf Geländefahrzeugen vorbereitet und ausgestattet sein.

Eine bevorzugte Variante des erfindungsgemäßen Transportfahrzeuges sieht eine gelenklose Verbindung seines Transportbereichs mit einem Fahrgestell des Zugfahrzeuges vor. Auf diese Weise ist ein integrierter Aufbau des Transportfahrzeuges mit starrer Rahmenverbindung zwischen Fahrgestell des Zugfahrzeuges und sich dahinter anschließendem Transportbereich gebildet. Um eine möglichst geringe Gesamtlänge realisieren zu können, ist das Führerhaus des Transportfahrzeuges zudem in Frontlenkerbauweise ausgebildet, wobei sich an den Fahrerbereich wahlweise eine integrierte oder separate Schlafkabine anschließen kann.

Weiterhin ist der Transportbereich des erfindungsgemäßen Transportfahrzeugs vorzugsweise in Niederflurbauweise ausgebildet, wodurch die Gesamthöhe des beladenen Transportfahrzeuges unterhalb von vier Metern bleiben kann, auch wenn dieses mit SUVs bzw. höher bauenden Geländefahrzeugen beladen ist, die unter Umständen jeweils eine Gesamthöhe von ca. zwei Metern aufweisen können. Sinnvollerweise befindet sich die untere Auflagefläche im hinter der Führerkabine befindlichen Transportbereich zumindest abschnittsweise ungefähr auf demselben Höhenniveau wie die Hinterachse oder darunter.

Weiterhin sieht eine Variante des erfindungsgemäßen Transportfahrzeugs vor, dass die obere Auflagefläche des Transportbereichs über mindestens zwei Stützenpaare mit dem Fahrgestell und/oder der unteren Auflagefläche verbunden ist. Zudem kann bspw. vorgesehen sein, dass den Stützenpaaren jeweils geeignete Linearantriebe zum Heben oder Senken der oberen Auflagefläche zugeordnet sind. Diese Linearantriebe können bspw. durch Spindelantriebe, Hydraulikantriebe oder sonstige Hebeantriebe gebildet sein. Zumindest dem hinteren Stützenpaar sind solche Linearantriebe zugeordnet, wogegen am vorderen Stützenpaar ggf. auf diese Absenkbarkeit der oberen Auflageebene verzichtet werden kann, wenn die obere Auflageebene dort lediglich schwenkbar aufgehängt ist.

Wahlweise oder zusätzlich können die Stützenpaare des Transportfahrzeugs jeweils um horizontale Schwenkachsen zwischen einer ungefähr vertikalen Transport- oder Betriebslage oder -position und einer geneigten oder ungefähr horizontalen Belade- oder Absenklage oder -position verschwenkbar ausgebildet sein. Auf diese Weise können die Stützenpaare gemeinsam mit der oberen Auflagefläche ungefähr parallelogrammartig beweglich oder verschwenkbar ausgebildet sein, was zum Absenken der oberen Auflagefläche eine parallelogramm-artige Verschwenkung der oberen Auflagefläche ermöglicht, wodurch diese mit zwei oder drei Kraftfahrzeugen beladen werden kann. Um die Ladekapazität zu erhöhen und die verfügbare Gesamtlänge des Transportfahrzeuges besser auszuschöpfen, kann sich die obere Auflagefläche zumindest teilweise über das Führerhaus erstrecken, so dass das vorderste darauf befindliche Kraftfahrzeug oberhalb der Fahrerkabine des Zugfahrzeuges steht. Die obere Auflageebene kann wahlweise in diese Bereich geteilt und/oder dort separat schwenkbar ausgebildet sein.

Das erfindungsgemäße Transportfahrzeug weist normalerweise drei Achsen mit jeweils linken und rechten Rädern auf, so dass insgesamt sechs Räder das gesamte Fahrzeuggewicht des unbeladenen oder beladenen Transportfahrzeuges auf der Straßenoberfläche abstützen. Selbstverständlich umfasst die verlegende Erfindung auch Transportfahrzeuge mit Zwillingsbereifungen an einzelnen Achsen, bspw. an der höher belasteten angetriebenen Mittelachse. Anstelle solcher Zwillingsbereifungen kommen jedoch auch hochtragfähige Breitreifen oder Niederquerschnittsreifen etc. in Frage. Die vorzugsweise aktiv, wahlweise auch passiv lenkende Hinterachse, die heckseitig in größerem Abstand zur angetriebenen Mittelachse angeordnet ist als deren Abstand zur gelenkten Vorderachse beträgt, kann wahlweise auch als Doppelachse ausgeführt sein, was insbesondere beim Einsatz sehr kleiner Räder und Reifen sinnvoll sein kann, um die Last auf insgesamt vier Hinterräder verteilen zu können. Wahlweise können auch heckseitig Zwillingsbereifungen und/oder breite Niederquerschnittsbereifungen zum Einsatz kommen, wenn dies aus Gründen der Lastenverteilung am Heck sinnvoll oder notwendig ist.

Wie oben erwähnt, kommt ein möglichst kurzes Führerhaus zum Einsatz, insbesondere ein solches in Frontlenkerbauweise, bei dem der Fahrersitz und die gesamte Kabine oberhalb des Antriebsmotors und oberhalb der lenkbaren Vorderachse angeordnet sind. Die leicht geneigte Frontscheibe geht hierbei nach unten normalerweise annähernd bündig in die ungefähr vertikale Führerhausfront über. Die Gesamtlänge des Transportfahrzeuges kann hierbei auch bei Beladung der unteren Auflagefläche mit zwei größeren Personenkraftwagen relativ kurz gehalten werden, so dass eine Gesamtlänge von ca. 14 bis 15 Metern unterschritten werden kann, was der Manövrierfähigkeit des Fahrzeuges zugutekommt. Auf der oberen Auflagefläche können typischerweise höchstens drei große Kraftfahrzeuge hintereinander befördert werden, was voraussetzt, dass sich die obere Auflagefläche nach vorne über das Führerhaus hinaus erstreckt und somit ungefähr mit dessen vorderster Umrisskante abschließt oder leicht über diese hinausragt. Wenn im vorliegenden Zusammenhang von großen Kraftfahrzeugen die Rede ist, so sind damit insbesondere Geländewagen, Großraumlimousinen oder sog. SUVs (Sport Utility Vehicle) gemeint, die eine Gesamtlänge von bis zu fünf Meter oder etwas mehr und eine Gesamthöhe von ca. zwei Metern oder auch etwas mehr aufweisen. Der Transport mehrerer solcher Fahrzeuge erfordert normalerweise einen doppelstöckigen Autotransporter mit angehängtem doppelstöckigem Anhänger, was einen relativ langen und schwer zu manövrierenden Zugverbund ergibt. Ein Nachteil eines solchen Zugverbundes liegt oftmals im Erfordernis einer entsprechenden Fahrerlaubnis für den Fahrer, da normalerweise eine Fahrerlaubnis für Lastkraftwagen (europäische Fahrerlaubnisklassen C bzw. CE) erforderlich ist. Das erfindungsgemäße Transportfahrzeug besitzt normalerweise insgesamt nur drei Achsen, so dass es je nach Beladung problemlos mit einer Fahrerlaubnis der alten Kasse 3 (deutsche Regelung bis 1998) bewegt werden darf.

Eine konstruktive Besonderheit liegt in dem sehr kurzen Achsabstand zwischen der gelenkten Vorderachse und der nicht gelenkten, aber angetriebenen Mittelachse, der typischerweise ca. 2,5 Metern beträgt, wahlweise auch etwas mehr oder etwas weniger, kaum aber oder nur in Ausnahmefällen weniger als zwei Meter. Sinnvollerweise sind die Räder der angetriebenen Mittelachse, die typischerweise als Starrachse mit Mitteldifferenzial ausgebildet ist, kleiner als die Vorderräder, so dass ein auf der unteren Auflageebene stehendes Kraftfahrzeug mit seiner Vorderachse auf einem Ladeabschnitt oberhalb der angetriebenen Mittelachse des Transportfahrzeuges stehen kann, ohne dass sein Dach die Unterseite der oberen Auflageebene touchiert. Dies ist besonders dann realisierbar, wenn ausreichend kleine Räder und/oder breite, mit ausreichender Tragfähigkeit ausgestattete Niederquerschnittreifen eingesetzt werden, bspw. solche mit einem Räder- bzw. Reifenquerschnitt von 17 Zoll oder weniger.

Sinnvolle Reifendimensionen können bspw. zwischen 16 Zoll und 23 Zoll betragen. Eine gebräuchliche und sinnvoll verwendbare Reifendimension für die Räder der Mittelachse kann bspw. bei 17,5 Zoll Durchmesser liegen, wobei sich die sinnvoll einsetzbare Reifenbreite nach der erforderlichen Tragfähigkeit richten kann. Ebenso kann für die gegensinnig zur Vorderachse lenkbare Hinterachse eine Reifendimension mit einem Zolldurchmesser von 17,5 eingesetzt werden, wahlweise auch von 19,5 oder auch zwischen diesen Größen. Ebenso kann für die Räder der Vorderachse wahlweise eine Reifendimension von 19,5 Zoll sinnvoll sein, wahlweise auch größer, bspw. 22 Zoll. Alle diese Rad- und Reifendimensionen sind beispielhaft zu verstehen und richten sich nach dem Einsatzzweck, der erforderlichen Traglast und dem zur Verfügung stehenden Einbauraum in den Radhäusern bzw. im Transportbereich. Insbesondere bei der lenkbaren Hinterachse kann es wahlweise sinnvoll sein, eine Zwillings- oder Doppelachse mit noch kleineren Rädern und Reifen mit einem Zolldurchmesser von weniger als 17,5 Zoll einzusetzen, was unter Umständen dem verfügbaren Transportraum oberhalb der Räder im Heckbereich der unteren Auflageebene zugutekommen kann. Ebenso trägt eine solche Zwilling- oder Doppelachse, die zulassungsrechtlich als einzelne Achse angesehen werden kann, sofern der Achsabstand unterhalb eines definierten Höchstmaßes (typischerweise zwischen ca. 80 Zentimeter und einem Meter, je nach nationaler Zulassungsbestimmung) liegt, zur Pannensicherheit bei, da auch bei einem auftretenden Defekt an einem Reifen eine langsame Weiterfahrt über eine kurze Strecke möglich ist, um den defekten Reifen möglichst schnell und gefahrlos wechseln zu können.

Wie erwähnt, ist dem Transportbereich heckseitig wenigstens eine lenkbare Hinterachse zur Lastabstützung zugeordnet. Diese lenkbare Hinterachse kann wahlweise eine aktive Lenkung aufweisen, die mit der lenkbaren Vorderachse in einer Weise gekoppelt ist, dass ein gegensinniger Lenkeinschlag gegeben ist, mit dessen Hilfe eine effektive Reduzierung des Wendekreises des Gesamtfahrzeuges realisiert werden kann. Wie es für den Fachmann leicht ersichtlich ist, ist die gegensinnige Lenkung der Hinterräder zur Vermeidung von starken Verspannungen fast unverzichtbar, da die Hinterachse sehr weit, typischerweise mindestens fünf bis sieben Meter oder mehr von der Mittelachse beabstandet ist, was bei nicht lenkbarer Mittelachse und ungelenkter Hinterachse Kurvenfahrten stark erschweren würde. Bei ungelenkter Hinterachse wäre eine gleichsinnig zur Vorderachse mitlenkende Mittelachse fast unverzichtbar, damit Kurvenfahrten ohne starke Materialbelastungen ermöglicht wären. Wahlweise kann die Hinterachse bspw. eine hydraulische oder elektromotorisch betriebene Lenkung aufweisen, die mit der gelenkten Vorderachse gekoppelt ist. Ebenso möglich ist jedoch auch eine passive Hinterachslenkung, die mittels einer geeigneten Achsgeometrie in einer Weise realisierbar ist, dass durch die bei Kurvenfahrt auftretenden Querkräfte ein gegensinniger Lenkeinschlag der Hinterräder zu den gelenkten Vorderrädern erzeugt wird.

Durch die beschriebene Anordnung wird ein insgesamt sehr kompaktes Transportfahrzeug zur Verfügung gestellt, das bei optimaler Rangierbarkeit und relativ geringer Gesamtlänge eine Transportkapazität für insgesamt mindestens fünf große Kraftfahrzeuge (z.B. mindestens fünf sog. SUV, Sport Utility Vehicle, bzw. mindestens fünf Geländefahrzeuge) zur Verfügung stellen kann.

Weiterhin schlägt die vorliegende Erfindung zur Erreichung der oben genannten Ziele ein Verfahren zum Beladen eines Transportfahrzeugs mit den Merkmalen des unabhängigen Verfahrensanspruchs vor. Das Verfahren bezieht sich hierbei auf ein Transportfahrzeug, das mindestens drei Achsen aufweist, das zur Beförderung von rollbaren Gütern oder Fahrzeugen, insbesondere von Kraftfahrzeugen, Persönenkraftwagen o. dgl. vorbereitet und vorgesehen ist, und das ein frontseitig oberhalb einer lenkbaren Vorderachse angeordnetes Führerhaus sowie einen dahinter angeordneten und/oder über das Führerhaus reichenden, mindestens zwei zumindest abschnittsweise übereinander angeordnete Auflageflächen umfassenden Transportbereich aufweist. Diesem Transportbereich ist heckseitig wenigstens eine lenkbare Hinterachse zur Lastabstützung zugeordnet. Außerdem weist das Transportfahrzeug wenigstens eine angetriebene Mittelachse auf, deren Achsabstand zur lenkbaren Vorderachse weniger als die Hälfte des Achsabstandes zur lenkbaren Hinterachse beträgt. Die obere Auflagefläche des Transportbereichs ist über mindestens zwei Stützenpaare mit dem Fahrgestell und/oder der unteren Auflagefläche verbunden. Das erfindungsgemäße Beladeverfahren umfasst zumindest die nachfolgend genannten Schritte.

So wird zunächst die obere Auflagefläche durch Verschwenken der Stützenpaare und/oder durch Aktivierung der Linearantriebe abgesenkt, so dass eine hintere Querkante der oberen Auflagefläche auf einer Fahrbahn aufliegt oder einen von Rädern der zu beladenden Fahrzeuge überrollbaren Abstand von der Fahrbahn aufweist. Danach erfolgt die Beladung der schräg gestellten und/oder abgesenkten oberen Auflagefläche durch Befahren der oberen Auflageebene mit einem, zwei oder insgesamt drei Fahrzeugen, wonach anschließend das Anheben der oberen Auflageebene mit den darauf befindlichen Fahrzeugen erfolgen kann. Nachdem die obere Auflageebene angehoben ist, ist die untere Auflageebene zugänglich gemacht, so dass bis zu zwei Fahrzeuge (ggf. auch mehr, wenn diese sehr kompakte Abmessungen aufweisen) auf die untere Auflageebene auffahren können. Abschließend können die Fahrzeuge in den jeweils eingenommenen Transportpositionen gegen Wegrollen gesichert, d.h. auf ihren jeweiligen Transportpositionen fixiert werden.

Bei einer Variante des erfindungsgemäßen Verfahrens wird die obere Auflagefläche im hinteren Bereich in Richtung Bodenoberfläche abgesenkt, indem sie am vorderen Stützenpaar zumindest verschwenkt und indem das hintere Stützenpaar nach hinten verschwenkt wird. Wahlweise können die Stützenpaare gemeinsam mit der oberen Auflagefläche ungefähr parallelogrammartig verschwenkt werden, wodurch die obere Auflagefläche abgesenkt bzw. wieder angehoben werden kann.

Nachfolgend finden sich zusammenfassend nochmals einige weitere Aspekte der vorliegenden Erfindung. So ist es aus Platzgründen sinnvoll, wenn das Führerhaus in sog. Frontlenkerbauweise ausgeführt ist, wodurch es aufgrund der Anordnung des Antriebsmotors im Bereich der Vorderachse und der darüber angeordneten Sitzplätze eines Fahrers und Beifahrers sehr kurz bauen kann. Die untere Auflagefläche kann normalerweise mindestens zwei hintereinander angeordnete größere Kraftfahrzeuge aufnehmen, während auf einer oberen Auflagefläche drei größere Kraftfahrzeuge hintereinander Platz finden können. Mit dem Begriff des größeren Kraftfahrzeugs ist im vorliegenden Zusammenhang bspw. ein Großraum-PKW, ein Geländefahrzeug oder ein sog. SUV gemeint, das bspw. eine Länge zwischen ca. 4,5 und ca. 5,5 Metern und eine Höhe zwischen ca. 1,6 und ca. 2 Metern aufweisen kann. Die angetriebene Mittelachse kann insbesondere als Starrachse mit Luft- oder Schraubenfederung ausgebildet sein, die über eine Gelenkwelle als zentrale Antriebswelle mit einem heckseitig mit dem unter dem Führerhaus befindlichen Antriebsmotor gekoppelten Gangwechselgetriebe gekoppelt ist. Der sehr kurze Achsabstand zwischen Mittel- und Vorderachse kann bspw. durch Umbau eines Aufliegerzugfahrzeuges erzielt werden, bei dem die Hinterachse soweit in Richtung zur Vorderachse versetzt wird, wie es der dadurch resultierende Knickwinkel der zentralen Antriebswelle zwischen Mitteldifferenzial der Mittelachse und Getriebeausgang des Gangwechselgetriebes erlaubt. Der durch einen solchen Umbau realisierte Achsabstand kann somit von deutlich mehr als drei Meter auf bis zu 2,5 Meter oder etwas weniger reduziert werden.

Da der Transportbereich des erfindungsgemäßen Transportfahrzeuges nicht als gelenkig mit dem Zugfahrzeug verbundener Aufliegeranhänger ausgebildet ist, sondern über eine starre Rahmenverbindung mit dem Zugfahrzeug verbunden ist, schließt sich an das ehemals solo betreibbare Zugfahrzeug die weitere Rahmenkonstruktion in integrierter Bauweise bis zum Heckbereich an, wie dies im nachfolgend erläuterten Ausführungsbeispiel und anhand der beiliegenden Zeichnungen beispielhaft verdeutlicht wird. Auf diese Weise ist eine gelenklose Verbindung des Transportbereichs mit dem Fahrgestell des Zugfahrzeuges geschaffen und gebildet, wodurch gleichermaßen ein integrierter Aufbau des Transportfahrzeuges mit starrer Rahmenverbindung zwischen dem Fahrgestell des Zugfahrzeuges und dem sich dahinter anschließenden Transportbereich gebildet ist. Insbesondere im Interesse einer möglichst geringen Gesamtlänge des Fahrzeuges ist das Führerhaus des Transportfahrzeuges bzw. des Zugfahrzeuges in Frontlenkerbauweise ausgebildet, wobei sich an den Fahrerbereich wahlweise eine integrierte oder separate Schlafkabine anschließen kann. Das wahlweise durch einen Umbau eines Sattelzugfahrzeuges umgestaltete Zugfahrzeug kann bspw. ein sog. Kleinlaster im mittleren Lastsegment sein, das eine Fahrzeugbreite von nur weniger mehr als zwei Meter oder auch geringfügig weniger aufweist, und das eine typische Fahrzeuggesamthöhe von ca. 2,2 bis 2,5 Meter aufweisen kann.

Der Transportbereich des Transportfahrzeuges ist vorzugsweise in Niederflurbaüweise ausgebildet, wodurch die Gesamthöhe des beladenen Transportfahrzeuges unterhalb von vier Metern bleiben kann, wodurch eine Konformität mit den geltenden gesetzlichen Regelungen zu den Höchstmaßen für zugelassene Kraftfahrzeuge im deutschen und europäischen Raum gegeben ist. Diese Gesamthöhe von weniger als vier Metern wird auch eingehalten, wenn das Transportfahrzeug mit SUVs bzw. höher bauenden Geländefahrzeugen beladen ist, die unter Umständen jeweils eine Gesamthöhe von bis zu zwei Metern oder auch etwas mehr aufweisen können. Um insgesamt fünf solche größeren Personenkraftwagen befördern zu können, befindet sich die untere Auflagefläche im hinter der Führerkabine befindlichen Transportbereich zumindest abschnittsweise ungefähr auf demselben Höhenniveau wie die Hinterachse oder ggf. auch leicht darunter. Die starre Rahmenverbindung der unteren Auflagefläche kann über der Mittelachse, die einen baulich integrierten Teil des Zugfahrzeuges bildet, in leichter Kröpfung ansteigen und sich somit bis an die Rückwand des Führerhauses bzw. dessen optional vorgesehener Schlafkabine erstrecken. Das auf der unteren Auflagefläche ganz nach vorne gefahrene Kraftfahrzeug kann somit mit seiner Vorderachse auf dem Zugfahrzeug bzw. auf dem höher liegenden vorderen Abschnitt der unteren Auflagefläche stehen, der sich über das Zugfahrzeug erstreckt. Somit kann sich die Vorderachse des vorderen, unten stehenden Kraftfahrzeuges zwischen der Vorderachse und der Mittelachse des Zugfahrzeuges befinden, typischerweise jedoch näher an der Mittelachse. Das dahinter stehende Kraftfahrzeug kann insbesondere rückwärts auf die untere Auflagefläche gefahren werden, so dass sich seine Vorderachse oberhalb der mitlenkenden Hinterachse des Transportfahrzeuges befinden kann, die aufgrund der Befahrbarkeit der unteren Auflagefläche eine deutliche Erhöhung an dieser Stelle benötigt. Die Gesamtbreite des Transportfahrzeuges muss kaum mehr als zwei Meter betragen.

Außerdem ist es sinnvoll, wenn sich die obere Auflagefläche nach vorne über das gesamte Führerhaus erstreckt, so dass insgesamt drei große Kraftfahrzeuge bzw. große SUVs auf der oberen Auflagefläche befördert werden können. Der Abstand der drei hintereinander stehenden Kraftfahrzeuge auf der oberen Auflageebene muss hierbei sehr gering sein, um insgesamt Platz auf der oberen Auflageebene zu finden. Auch der Abstand der Unterseite der oberen Auflageebene zu den Dächern der unten stehenden Kraftfahrzeuge ist normalerweise sehr knapp bemessen, um nicht die zulässige Gesamthöhe von vier Metern für das beladene Transportfahrzeug zu überschreiten.

Weiterhin sieht eine bevorzugte Variante des erfindungsgemäßen Transportfahrzeugs vor, dass die obere Auflagefläche des Transportbereichs über mindestens zwei Stützenpaare mit dem Fahrgestell des Zugfahrzeuges bzw. der unteren Auflagefläche verbunden ist. Zudem kann vorgesehen sein, dass den Stützenpaaren jeweils geeignete Linearantriebe zum Heben oder Senken der oberen Auflagefläche zugeordnet sind. Diese Linearantriebe können bspw. durch Spindelantriebe, Hydraulikantriebe oder sonstige Hebeantriebe gebildet sein. Zumindest dem hinteren Stützenpaar sind solche Linearantriebe zur Absenkung der oberen Auflageebene zugeordnet, wogegen am vorderen Stützenpaar ggf. auf diese Absenkbarkeit der oberen Auflageebene verzichtet sein kann, wenn diese dort lediglich schwenkbar aufgehängt ist.

Wahlweise oder zusätzlich können die Stützenpaare des Transportfährzeugs jeweils um horizontale Schwenkachsen zwischen einer ungefähr vertikalen Transport- oder Betriebslage oder -position und einer geneigten oder ungefähr horizontalen Belade- oder Absenklage oder -position verschwenkbar ausgebildet sein. Auf diese Weise können die Stützenpaare gemeinsam mit der oberen Auflagefläche ungefähr parallelogrammartig beweglich oder verschwenkbar ausgebildet sein, was zum Absenken der oberen Auflagefläche eine parallelogrammartige Verschwenkung der oberen Auflagefläche ermöglicht, wodurch diese mit zwei oder drei Kraftfahrzeugen beladen werden kann. Die obere Auflageebene kann wahlweise in dem Bereich, der sich über das Führerhaus erstreckt, geteilt und/oder dort separat schwenkbar ausgebildet sein.

Sinnvolle Reifendimensionen für die Räder an den verschiedenen Achsen können bspw. zwischen 15 oder 16 Zoll und ca. 23 Zoll betragen. Eine gebräuchliche und sinnvoll verwendbare Reifendimension für die Räder der Mittelachse kann bspw. bei einem Zolldurchmesser von 17,5 liegen, wobei sich die sinnvoll einsetzbare Reifenbreite nach der erforderlichen Tragfähigkeit des jeweiligen Fahrzeuges richten kann. Ebenso kann für die gegensinnig zur Vorderachse lenkbare Hinterachse im Transportbereich eine Reifendimension mit einem Zolldurchmesser von 17,5 eingesetzt werden, wahlweise auch von 19,5 oder auch zwischen diesen Größen. Ebenso kann für die Räder der Vorderachse wahlweise eine Reifendimension von 19,5 Zoll sinnvoll sein, wahlweise auch größer, bspw. 22 Zoll. Alle diese Rad- und Reifendimensionen sind beispielhaft zu verstehen und richten sich nach dem Einsatzzweck, der erforderlichen Traglast und dem jeweils verfügbaren Einbauraum in den Radhäusern bzw. im Transportbereich.

Insbesondere bei der lenkbaren Hinterachse kann es wahlweise sinnvoll sein, eine Zwillings- oder Doppelachse mit noch kleineren Rädern und Reifen mit einem Zolldurchmesser von weniger als 17,5 Zoll einzusetzen, was unter Umständen dem verfügbaren Transportraum oberhalb der Räder im Heckbereich der unteren Auflageebene zugutekommen kann. Ebenso trägt eine solche Zwillings- oder Doppelachse, die zulassungsrechtlich als einzelne Achse angesehen werden kann, sofern der Achsabstand unterhalb eines definierten Höchstmaßes (typischerweise zwischen ca. 80 Zentimeter und einem Meter oder etwas mehr, je nach nationaler Zulassungsbestimmung) liegt, zur Pannensicherheit bei, da auch bei einem auftretenden Defekt an einem der insgesamt vier Reifen eine langsame Weiterfahrt über eine kurze Strecke möglich ist, um den defekten Reifen möglichst schnell und gefahrlos wechseln zu können.

Wie erwähnt, ist die obere Auflagefläche des Transportbereichs über zwei oder mehr Stützenpaare mit dem Fahrgestell bzw. der unteren Auflagefläche verbunden. Um das Transportfahrzeug entsprechend seiner Ladekapazität mit mehreren Kraftfahrzeugen zu beladen, muss zunächst die obere Auflageebene für das Befahren der Kraftfahrzeuge zugänglich gemacht werden, was die Absenkung zumindest des hinteren Abschnittes der Auflagefläche erforderlich macht. Ggf. kann auch der vordere Bereich der Auflagefläche zumindest teilweise abgesenkt werden. Außerdem können die Stützenpaare wahlweise nach hinten geschwenkt werden, um die obere Auflagefläche für das Befahren mit zu ladenden Kraftfahrzeugen zugänglich zu machen.

Bei einer ersten Variante zur Absenkung der oberen Auflagefläche oder Ladeebene des Transportfahrzeuges kann die obere Auflagefläche wahlweise entlang der vertikalen vorderen und hinteren Stützenpaare durch Aktivierung der dort angeordneten Linearantriebe abgesenkt werden, so dass eine hintere Querkante oder herausziehbare Auffahrrampe an der Hinterseite der oberen Auflagefläche auf der Fahrbahn aufliegen kann bzw. zumindest einen von Rädern der zu beladenden Fahrzeuge überrollbaren Abstand von der Fahrbahn aufweist. Danach kann die Beladung der abgesenkten oberen Auflagefläche durch Befahren der oberen Auflageebene mit einem, zwei oder insgesamt drei Fahrzeugen (ggf. auch mehr, wenn diese sehr kompakte Abmessungen aufweisen) erfolgen, wonach anschließend die obere Auflageebene mit den darauf befindlichen Fahrzeugen wieder angehoben werden kann, was wiederum mittels der den Stützenpaaren zugeordneten Linearantriebe erfolgen kann. Diese Linearantriebe können, wie zuvor erwähnt, wahlweise durch Spindelantriebe, hydraulische Antriebe, elektromotorische Antriebe o. dgl. gebildet sein. Nachdem die obere Auflageebene angehoben ist, ist die untere Auflageebene wieder zugänglich, so dass bis zu zwei Fahrzeuge (ggf. auch mehr, wenn diese sehr kompakte Abmessungen aufweisen) auf die untere Auflageebene auffahren können. Abschließend können die Fahrzeuge in den jeweils eingenommenen Transportpositionen gegen Wegrollen gesichert, d.h. auf ihren jeweiligen Transportpositionen fixiert werden.

Bei einer zweiten Variante zur Absenkung der oberen Auflagefläche oder Ladeebene des Transportfahrzeuges kann ein hinterer Bereich der oberen Auflagefläche durch Verschwenken am vorderen Stützenpaar um eine Schwenkachse und durch gleichzeitige Aktivierung der Linearantriebe des hinteren Stützenpaars abgesenkt werden, so dass eine hintere Querkante oder ausziehbare Auffahrrampe der oberen Auflagefläche auf der Fahrbahn aufliegen kann oder zumindest einen von den Rädern der zu beladenden Fahrzeuge überrollbaren Abstand von der Fahrbahn aufweist. Danach erfolgt die Beladung der schräg gestellten oberen Auflagefläche durch Befahren der oberen Auflageebene mit einem, zwei oder insgesamt drei Fahrzeugen (ggf. auch mehr, wenn diese sehr kompakte Abmessungen aufweisen), wonach anschließend das Anheben der oberen Auflageebene mit den darauf befindlichen Fahrzeugen erfolgen kann. Nachdem die obere Auflageebene heckseitig angehoben ist und um die vordere Schwenkachse am vorderen Stützenpaar in die horizontale Lage geschwenkt ist, ist die untere Auflageebene zugänglich gemacht, so dass bis zu zwei Fahrzeuge (ggf. auch mehr, wenn diese sehr kompakte Abmessungen aufweisen) auf die untere Auflageebene auffahren können. Abschließend können die Fahrzeuge in den jeweils eingenommenen Transportpositionen gegen Wegrollen gesichert, d.h. auf ihren jeweiligen Transportpositionen fixiert werden.

Wahlweise kann zur Erleichterung des Auffahrens des vordersten Kraftfahrzeugs vorgesehen sein, dass ein das Führerhaus überragender vorderer Abschnitt der oberen Auflagefläche, der vor dem vorderen Stützenpaar 40 angeordnet ist und nicht mit nach unten schwenkt bzw. gar nicht mit dem schwenkbaren und/oder absenkbaren Abschnitt der oberen Auflagefläche verbunden ist, zumindest abschnittsweise nach oben geschwenkt werden kann, um für die Beladephase eine durchgängig geneigte Auffahrfläche zu bilden, wenn die Auflagefläche mit ihrem hinteren Bereich zum Boden hin abgesenkt ist. Bei beladenem Transportfahrzeug ist dieser vordere Abschnitt wieder in eine horizontale Lage zu bringen, wie dies auch die nachfolgend erläuterten Zeichnungen erkennen lassen.

Eine weitere Variante zur Absenkung der oberen Auflagefläche oder Ladeebene des Transportfahrzeuges kann zudem vorsehen, dass die beiden Stützenpaare jeweils nach hinten verschwenkt werden. Auf diese Weise wird wiederum die obere Auflagefläche mitsamt ihrem hinteren Bereich durch gleichzeitiges und/oder ungefähr paralleles Verschwenken der beiden Stützenpaare nach hinten abgesenkt, so dass die hintere Querkante oder ausziehbare Auffahrrampe der oberen Auflagefläche auf der Fahrbahn aufliegen kann oder zumindest einen von den Rädern der zu beladenden Fahrzeuge überrollbaren Abstand von der Fahrbahn aufweist. Die Linearantriebe der Stützenpaare werden bei dieser Variante des Absenkvorganges normalerweise nicht benötigt bzw. nicht aktiviert. Aus der oberen horizontalen Lage wird die obere Auflagefläche unter Beibehaltung einer ungefähr horizontalen Lage allmählich nach unten und gleichzeitig nach hinten gebracht, bis sie annähernd auf der unteren Auflagefläche aufliegt bzw. gering von dieser beabstandet ist und mit Kraftfahrzeugen befahren werden kann.

Danach erfolgt wiederum die Beladung der abgesenkten oberen Auflagefläche durch Befahren mit einem, zwei oder insgesamt drei Fahrzeugen (oder auch mehr), wonach anschließend das Anheben der oberen Auflageebene mit den darauf befindlichen Fahrzeugen erfolgen kann. Danach ist die untere Auflageebene zugänglich gemacht, so dass bis zu zwei Fahrzeuge (ggf. auch mehr, wenn diese sehr kompakte Abmessungen aufweisen) auf die untere Auflageebene auffahren können. Abschließend können die Fahrzeuge in den jeweils eingenommenen Transportpositionen gegen Wegrollen gesichert, d.h. auf ihren jeweiligen Transportpositionen fixiert werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Seitenansicht einer Ausführungsvariante eines erfindungsgemäßen Transportfahrzeuges mit zwei übereinander angeordneten Lade- oder Auflageebenen, das mit insgesamt fünf Kraftfahrzeugen beladen ist.
Fig. 2 zeigt zwei schematische Draufsichten auf das Transportfahrzeug gemäß Fig. 1 zur Verdeutlichung der Anordnung seiner Achsen und Räder.
Fig. 3 zeigt in zwei schematischen Seitenansichten eine erste Variante zur Absenkung einer oberen Auflagefläche oder Ladeebene des Transportfahrzeuges gemäß Fig. 1, um das Befahren der Auflagefläche oder Ladeebene mit Kraftfahrzeugen zu ermöglichen.
Fig. 4 zeigt in zwei weiteren schematischen Seitenansichten eine zweite Variante zur Absenkung einer oberen Auflagefläche oder Ladeebene des Transportfahrzeuges gemäß Fig. 1, um das Befahren der Auflagefläche oder Ladeebene mit Kraftfahrzeugen zu ermöglichen.
Fig. 5 zeigt in insgesamt vier schematischen Seitenansichten eine dritte Variante zur Absenkung einer oberen Auflagefläche oder Ladeebene des Transportfahrzeuges gemäß Fig. 1, um das Befahren der Auflagefläche oder Ladeebene mit Kraftfahrzeugen zu ermöglichen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

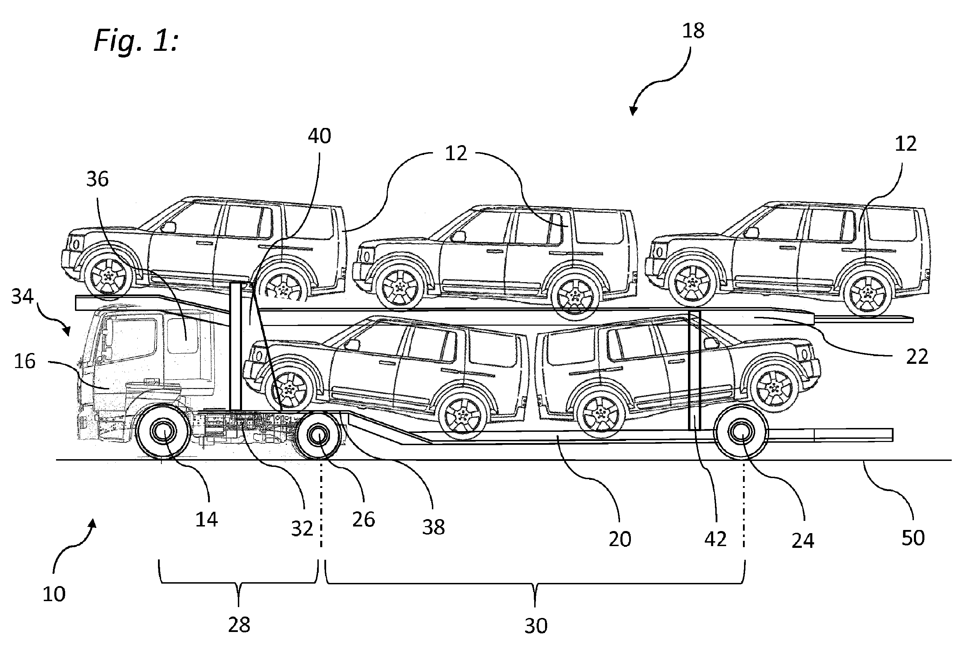

Die schematische Seitenansicht der Fig. 1 zeigt eine Ausführungsvariante eines erfindungsgemäßen Transportfahrzeuges 10. Das dargestellte Transportfahrzeug 10 dient der Beförderung von rollbaren Gütern wie Kraftfahrzeugen 12, im gezeigten Ausführungsbeispiel von insgesamt maximal fünf Kraftfahrzeugen 12. Wie es die Fig. 1 erkennen lässt, weist das Transportfahrzeug 10 ein frontseitig oberhalb einer lenkbaren Vorderachse 14 angeordnetes Führerhaus 16 sowie einen dahinter angeordneten, zumindest teilweise über das Führerhaus 16 reichenden Transportbereich 18 auf. Das Führerhaus 16 ist in Frontlenkerbauweise ausgeführt, wodurch es aufgrund der Anordnung des Antriebsmotors im Bereich der Vorderachse 14 und der darüber angeordneten Sitzplätze eines Fahrers und Beifahrers sehr kurz bauen kann.

Der Transportbereich 18 umfasst zwei zumindest abschnittsweise übereinander angeordnete Auflageflächen 20 und 22 zur Aufnahme der Kraftfahrzeuge 12. Eine untere Auflagefläche 20 kann zwei hintereinander angeordnete Kraftfahrzeuge 12 aufnehmen, während auf einer oberen Auflagefläche 22 drei Kraftfahrzeuge 12 hintereinander platziert sind. Dem Transportbereich 18 ist heckseitig eine lenkbare Hinterachse 24 zur Lastabstützung zugeordnet, die sich im hinteren Bereich der unteren Auflagefläche 20 befindet und die sinnvollerweise in einer Weise mit der Vorderachse 14 gekoppelt ist, dass sie jeweils gegensinnige Lenkeinschläge zu den Rädern der Vorderachse 14 ausführt.

Außerdem ist das Transportfahrzeug 10 mit einer angetriebenen Mittelachse 26 ausgestattet, deren Achsabstand 28 zur lenkbaren Vorderachse 14 weniger als die Hälfte des Achsabstandes 30 zur lenkbaren Hinterachse 24 beträgt. Im gezeigten Ausführungsbeispiel beträgt der Achsabstand 28 zwischen der gelenkten Vorderachse 14 und der angetriebenen Mittelachse 26 etwa zweieinhalb Meter, während der Achsabstand 30 zur Hinterachse 24 mindestens sechs Meter oder etwas mehr beträgt.

Die gezeigte Ausführungsvariante des erfindungsgemäßen Transportfahrzeuges 10 sieht eine gelenklose Verbindung seines Transportbereichs 18 mit einem Fahrgestell 32 des Zugfahrzeuges 34 vor. Auf diese Weise ist ein integrierter Aufbau des Transportfahrzeuges 10 mit starrer Rahmenverbindung zwischen dem Fahrgestell 32 des Zugfahrzeuges 34 und sich dahinter anschließendem Transportbereich 18 gebildet. Im Interesse einer möglichst geringen Gesamtlänge des Fahrzeuges 10 ist das Führerhaus 16 des Transportfahrzeuges 10 bzw. des Zugfahrzeuges 34 in Frontlenkerbauweise ausgebildet, wobei sich an den Fahrerbereich wahlweise eine integrierte oder separate Schlafkabine 36 anschließen kann.

Der Transportbereich 18 des Transportfahrzeuges 10 ist in Niederflurbauweise ausgebildet, wodurch die Gesamthöhe des beladenen Transportfahrzeuges 10 unterhalb von vier Metern bleiben kann, wodurch eine Konformität mit den geltenden gesetzlichen Regelungen zu den Höchstmaßen für zugelassene Kraftfahrzeuge im deutschen und europäischen Raum gegeben ist. Diese Gesamthöhe von weniger als vier Metern wird auch eingehalten, wenn das Transportfahrzeug 10 mit SUVs bzw. höher bauenden Geländefahrzeugen beladen ist, die unter Umständen jeweils eine Gesamthöhe von ca. zwei Metern aufweisen können. Um insgesamt fünf solche größeren Personenkraftwagen 12 befördern zu können, befindet sich die untere Auflagefläche 20 im hinter der Führerkabine 16 befindlichen Transportbereich 18 zumindest abschnittsweise ungefähr auf demselben Höhenniveau wie die Hinterachse 24 oder ggf. auch leicht darunter. Die starre Rahmenverbindung der unteren Auflagefläche 20 steigt über der Mittelachse 26, die einen baulich integrierten Teil des Zugfahrzeuges 34 bildet, in leichter Kröpfung an und erstreckt sich somit bis an die Rückwand des Führerhauses 16 bzw. dessen optional vorgesehener Schlafkabine 36. Das auf der unteren Auflagefläche 20 ganz nach vorne gefahrene Kraftfahrzeug 12 steht somit mit seiner Vorderachse auf dem Zugfahrzeug 34 bzw. auf dem höher liegenden vorderen Abschnitt 38 der unteren Auflagefläche 20, der sich über das Zugfahrzeug 34 erstreckt.

Im gezeigten Ausführungsbeispiel steht die Vorderachse des vorderen, unten stehenden Kraftfahrzeuges 12 zwischen der Vorderachse 14 und der Mittelachse 26 des Zugfahrzeuges, jedoch näher an der Mittelachse 26. Das dahinter stehende Kraftfahrzeug 12 wurde rückwärts auf die untere Auflagefläche 20 gefahren, so dass sich seine Vorderachse über die mitlenkenden Hinterachse 24 des Transportfahrzeuges 10 befinden kann, die aufgrund der Befahrbarkeit der unteren Auflagefläche 20 eine deutliche Erhöhung an dieser Stelle benötigt. Die zu beladenen Kraftfahrzeuge 12 können normalerweise nicht zwischen die Räder der Hinterachse 24 gefahren werden, weil in diesem Fall der Transportbereich 18 deutlich breiter als zwei Meter ausfallen müsste, unter Umständen sogar breiter als die für eine Fahrt auf öffentlichen Straßen zulässigen zweieinhalb Meter. Aus diesem Grund muss sich die untere Auflagefläche 20 mit ihren Fahrspuren jeweils über die Hinterachse 24 erstrecken, was eine entsprechende Positionierung der geladenen Kraftfahrzeuge 12 entsprechend Fig. 1 erfordert. Da die im Frontbereich liegende Motorhaube der Kraftfahrzeuge 12 deutlich tiefer liegt als der Dachbereich ihrer Passagierkabine, kann die Vorderachse der Kraftfahrzeuge 12 jeweils erhöht stehen, ohne dass ihr Dachbereich die Unterseite der oberen Auflageebene 22 touchiert.

Mit der gezeigten Anordnung muss die Gesamtbreite des Transportfahrzeuges 10 typischerweise nur wenig mehr als zwei Meter betragen. Da jedoch die Stützenpaare 40 und 42 jeweils links und rechts von den Auflageebenen 20 und 22 mit den darauf platzierbaren Kraftfahrzeugen 12 etwas Platz benötigen, ist bei einer Fahrzeugbreite der transportierten Fahrzeuge 12 von bspw. 1,90 Metern eine Gesamtbreite des Transportbereichs von kaum weniger als 2,20 Metern realisierbar. Allerdings muss das Transportfahrzeug 10 auch nicht wesentlich breiter als ca. 2,10 ... 2,30 Meter ausfallen. Sollen dagegen normalerweise kompaktere und/oder schmalere Fahrzeuge 12 transportiert werden, kann die Gesamtbreite des Transportfahrzeuges 10 bzw. seines Transportbereichs 18 auch entsprechend geringer ausfallen.

Zudem erstreckt sich die obere Auflagefläche 22 nach vorne über das gesamte Führerhaus 16, so dass insgesamt drei große Kraftfahrzeuge 12 bzw. große SUVs auf der oberen Auflagefläche 22 befördert werden können. Der Abstand der drei hintereinander stehenden Kraftfahrzeuge 12 auf der oberen Auflageebene 22 muss hierbei sehr gering sein, um insgesamt Platz auf der oberen Auflageebene 22 zu finden. Auch der Abstand der Unterseite der oberen Auflageebene 22 zu den Dächern der unten stehenden Kraftfahrzeuge ist knapp bemessen, um nicht die zulässige Gesamthöhe von vier Metern für das beladene Transportfahrzeug 10 zu überschreiten.

Weiterhin sieht die in Fig. 1 gezeigte Variante des erfindungsgemäßen. Transportfahrzeugs 10 vor, dass die obere Auflagefläche 22 des Transportbereichs 18 über mindestens zwei Stützenpaare 40 und 42 mit dem Fahrgestell des Zugfahrzeuges 24 bzw. der unteren Auflagefläche 20 verbunden ist. Zudem kann vorgesehen sein, dass den Stützenpaaren 40 und 42 jeweils geeignete Linearantriebe zum Heben oder Senken der oberen Auflagefläche 22 zugeordnet sind. Diese Linearantriebe können bspw. durch Spindelantriebe, Hydraulikantriebe oder sonstige Hebeantriebe gebildet sein. Zumindest dem hinteren Stützenpaar 42 sind solche Linearantriebe zur Absenkung der oberen Auflageebene 22 zugeordnet, wogegen am vorderen Stützenpaar 40 ggf. auf diese Absenkbarkeit der oberen Auflageebene 22 verzichtet sein kann, wenn diese dort lediglich schwenkbar aufgehängt ist.

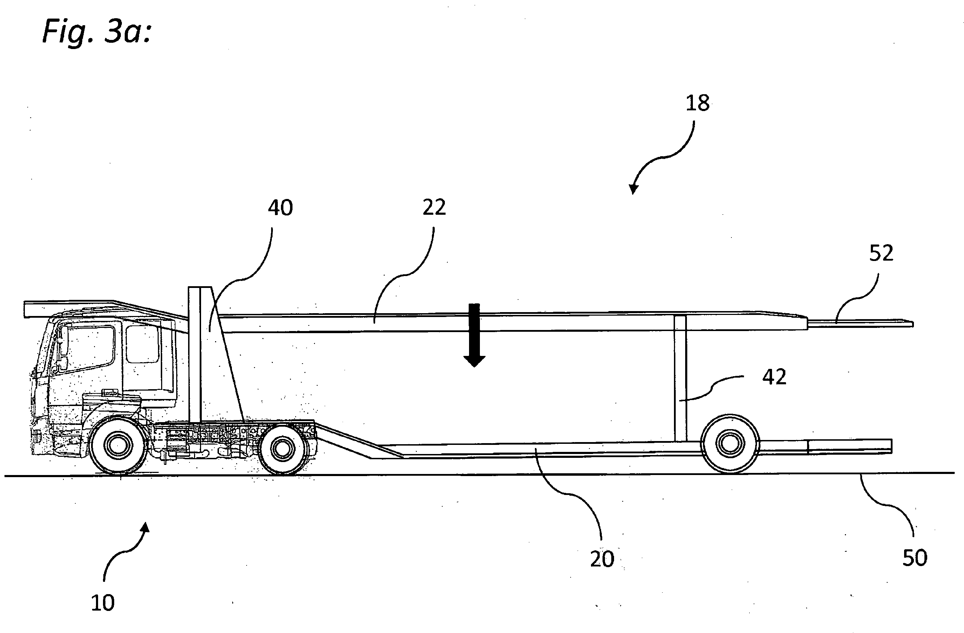

Wahlweise oder zusätzlich können die Stützenpaare 40 und 42 des Transportfahrzeugs 10 jeweils um horizontale Schwenkachsen zwischen einer ungefähr vertikalen Transport- oder Betriebslage oder -position und einer geneigten oder ungefähr horizontalen Belade- oder Absenklage oder -position verschwenkbar ausgebildet sein. Diese Verstellbarkeit bzw. diese Bewegungsoptionen der Stützenpaare 40 und 42 sowie der daran aufgehängten oberen Auflageebene 22 sind anhand der folgenden Figuren 3a bis 5d näher verdeutlicht und werden anhand der gezeigten unterschiedlichen Betriebs-und Beladepositionen näher veranschaulicht. Auf die dort gezeigte Weise können die Stützenpaare 40 und 42 gemeinsam mit der oberen Auflagefläche 22 ungefähr parallelogrammartig beweglich oder verschwenkbar ausgebildet sein, was zum Absenken der oberen Auflagefläche 22 eine parallelogrammartige Verschwenkung der oberen Auflagefläche 22 ermöglicht, wodurch diese mit zwei oder drei Kraftfahrzeugen 12 beladen werden kann. Um die Ladekapazität zu erhöhen und die verfügbare Gesamtlänge des Transportfahrzeuges 10 besser auszuschöpfen, erstreckt sich die obere Auflagefläche 22 zumindest teilweise über das Führerhaus 16, so dass das vorderste darauf befindliche Kraftfahrzeug 12 oberhalb der Fahrerkabine 16 des Zugfahrzeuges 34 steht. Die obere Auflageebene 22 kann wahlweise in diesem Bereich geteilt und/oder dort separat schwenkbar ausgebildet sein.

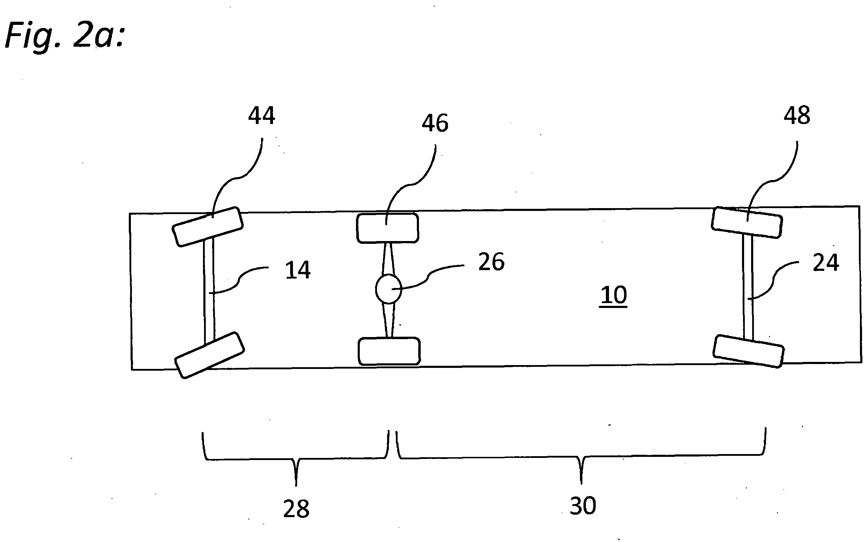

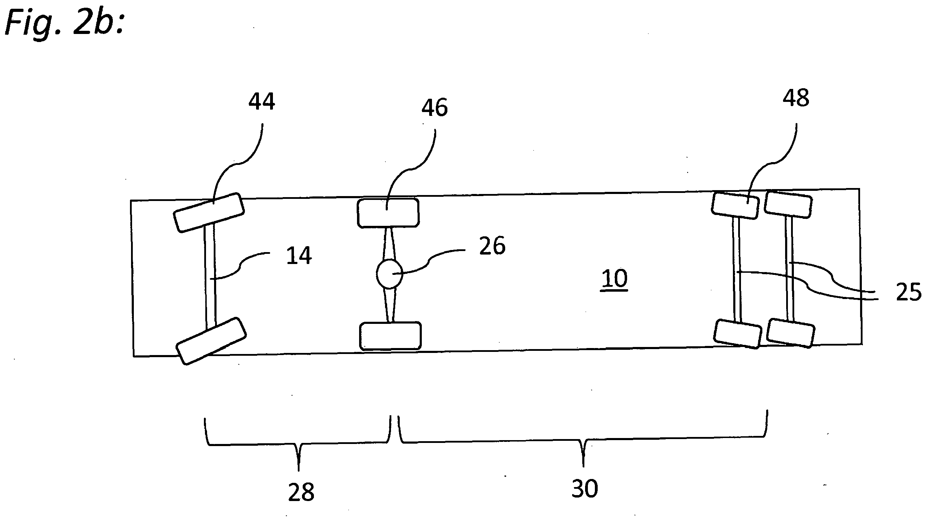

Wie es die schematische Draufsicht der Fig. 2a erkennen lässt, weist das Transportfahrzeug 10 drei Achsen 14, 26 und 24 mit jeweils linken und rechten Rädern 44, 46 bzw. 48 auf, so dass insgesamt sechs Räder 44, 46 und 48 das gesamte Fahrzeuggewicht des unbeladenen oder beladenen Transportfahrzeuges 10 auf der Straßenoberfläche 50 (vgl. Fig. 1) abstützen. Im gezeigten Darstellungsbeispiel der Fig. 2 sind die Vorderräder 44 in Fahrtrichtung 52 nach links eingeschlagen. Während die angetriebenen Räder 46 der ungelenkten Mittelachse 26 immer parallel zur Fahrtrichtung 52 sowie zur Längserstreckungsrichtung des Transportfahrzeuges 10 ausgerichtet bleiben, ist aufgrund der integrierten Bauweise mit starrer Rahmenverbindung zwischen dem Transportbereich 18 und dem Fahrgestell 32 des Zugfahrzeuges 34 eine aktive oder passive Lenkung der hinteren Räder 48 der Hinterachse 24 zwingend erforderlich. Die vorzugsweise aktiv, wahlweise auch passiv lenkende Hinterachse 24, die heckseitig in größerem Achsabstand 30 zur angetriebenen Mittelachse 26 angeordnet ist als deren Abstand 28 zur gelenkten Vorderachse 14, kann bspw. über eine elektromotorisch oder hydraulische Lenkung verfügen, die mit den Lenkbefehlen der Vorderachse 14 gekoppelt ist, so dass die hinteren Räder 48 an der Hinterachse 24 jeweils einen gegensinnigen Lenkeinschlag zu den Vorderrädern 44 an der Vorderachse 14 ausführen. Aufgrund der unterschiedlichen Achsabstände 28 und 30 ist der Lenkeinschlag an der Hinterachse 24 normalerweise geringer als an der Vorderachse 14.

Sinnvolle Reifendimensionen für die Räder 44, 46 und 48 an den verschiedenen Achsen 14, 26 bzw. 24 können bspw. zwischen 15 oder 16 Zoll und ca. 23 Zoll betragen. Eine gebräuchliche und sinnvoll verwendbare Reifendimension für die Räder 46 der Mittelachse 26 kann bspw. bei einem Zolldurchmesser von 17,5 liegen, wobei sich die sinnvoll einsetzbare Reifenbreite nach der erforderlichen Tragfähigkeit des jeweiligen Fahrzeuges richten kann. Ebenso kann für die gegensinnig zur Vorderachse 14 lenkbare Hinterachse 24 im Transportbereich 18 eine Reifendimension mit einem Zolldurchmesser von 17,5 eingesetzt werden, wahlweise auch von 19,5 oder auch zwischen diesen Größen. Ebenso kann für die Räder 44 der Vorderachse 14 wahlweise eine Reifendimension von 19,5 Zoll sinnvoll sein, wahlweise auch größer, bspw. 22 Zoll. Alle diese Rad- und Reifendimensionen sind beispielhaft zu verstehen und richten sich nach dem Einsatzzweck, der erforderlichen Traglast und dem jeweils verfügbaren Einbauraum in den Radhäusern bzw. im Transportbereich 18.

Insbesondere bei der lenkbaren Hinterachse 24 kann es wahlweise sinnvoll sein, eine Zwillings- oder Doppelachse 25 mit noch kleineren Rädern und Reifen 48 mit einem Zolldurchmesser von weniger als 17,5 Zoll einzusetzen (in Fig. 2b beispielhaft dargestellt), was unter Umständen dem verfügbaren Transportraum oberhalb der Räder 48 im Heckbereich der unteren Auflageebene 20 zugutekommen kann. Ebenso trägt eine solche Zwillings- oder Doppelachse 25, die zulassungsrechtlich als einzelne Achse angesehen werden kann, sofern der Achsabstand unterhalb eines definierten Höchstmaßes (typischerweise zwischen ca. 80 Zentimeter und einem Meter oder etwas mehr, je nach nationaler Zulassungsbestimmung) liegt, zur Pannensicherheit bei, da auch bei einem auftretenden Defekt an einem der insgesamt vier Reifen 48 eine langsame Weiterfahrt über eine kurze Strecke möglich ist, um den defekten Reifen möglichst schnell und gefahrlos wechseln zu können. Wenn anstelle der in Fig. 2a gezeigten Hinterachse 24 eine Doppel- oder Zwillingsachse 25 zum Einsatz kommt, kann als Maß für den hinteren Achsabstand 30 (vgl. auch Fig. 1) wahlweise der Mittelabstand dieser Zwillings- oder Doppelachse 25 oder auch der Abstand der vorderen der beiden eng beieinander stehenden Achsen zum Ansatz kommen.

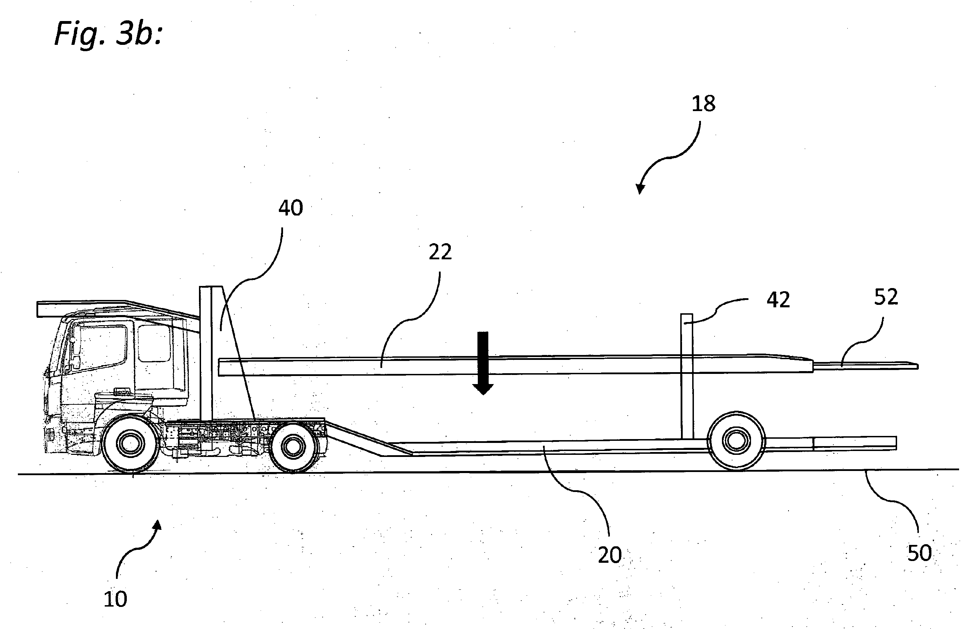

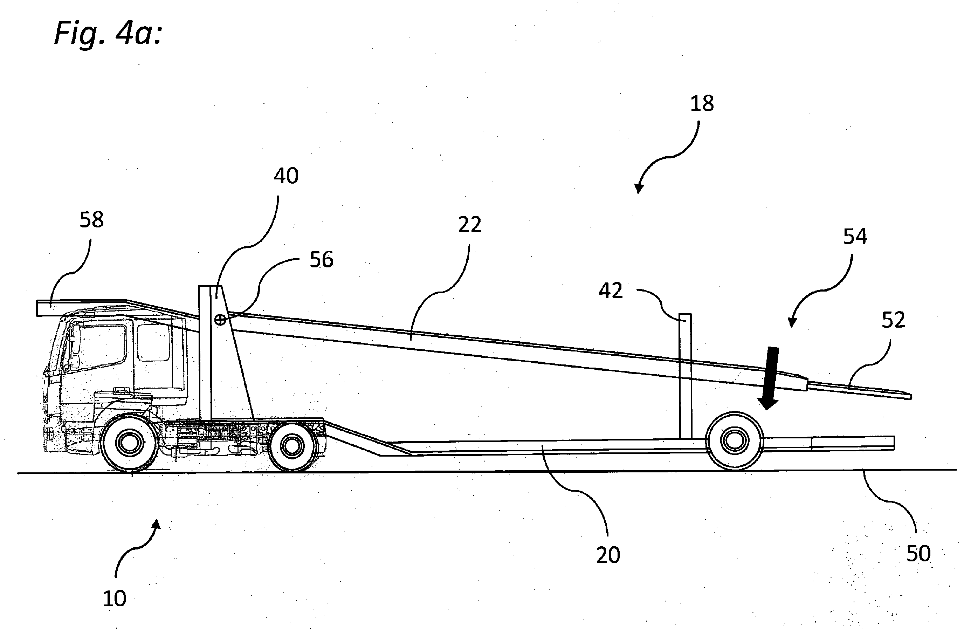

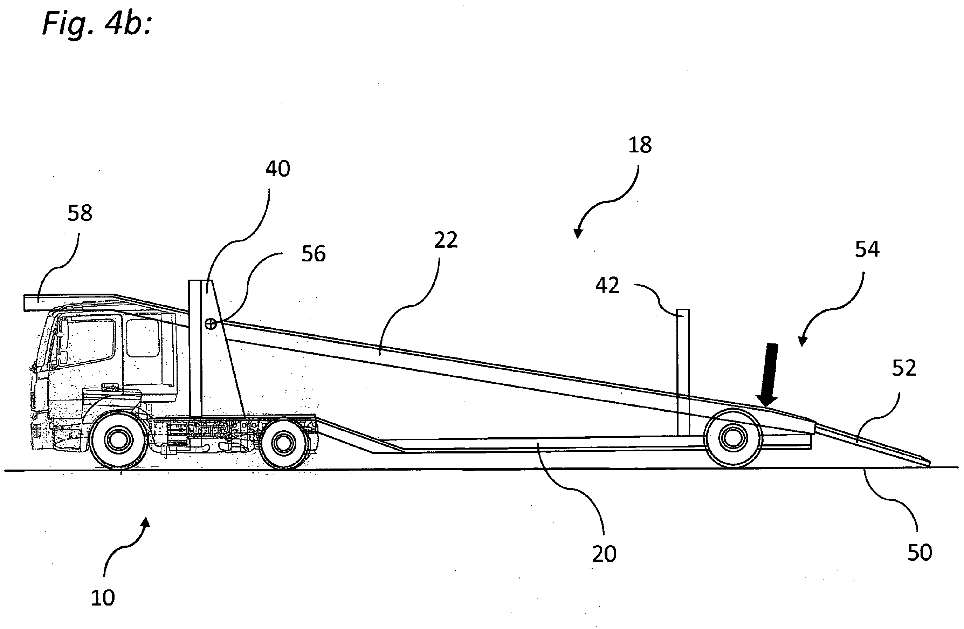

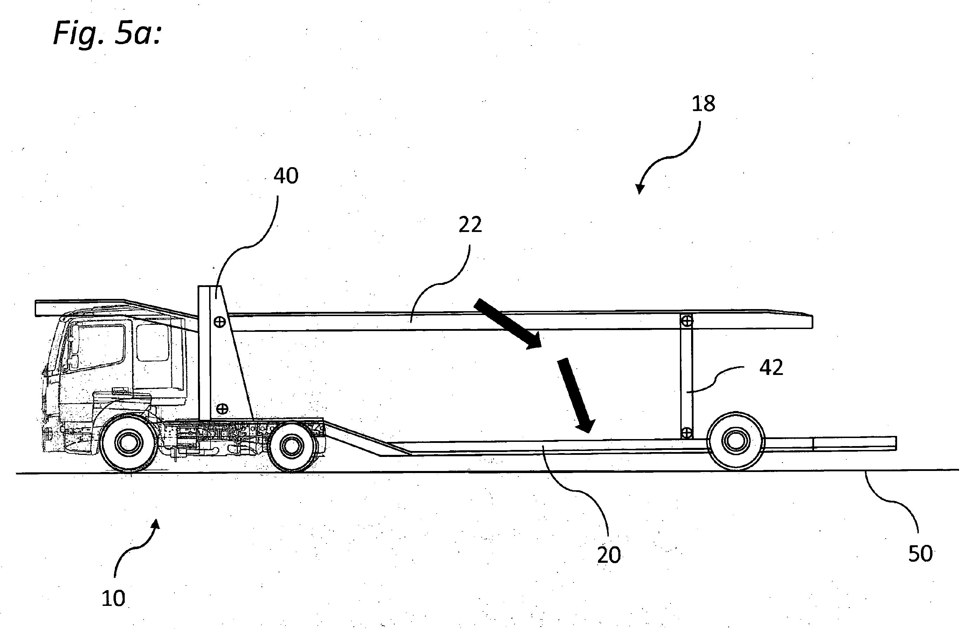

Anhand der schematischen Seitenansichten der Figuren 3a bis 5d werden nachfolgend aufeinander folgende Verfahrensschritte verdeutlicht, wie sie für das Beladen des in Fig. 1 gezeigten Ausführungsbeispiels des erfindungsgemäßen Transportfahrzeuges 10 erforderlich sind. Wie oben erwähnt, ist die obere Auflagefläche 22 des Transportbereichs 18 über mindestens zwei Stützenpaare 40 und 42 mit dem Fahrgestell 32 bzw. der unteren Auflagefläche 20 verbunden. Um das Transportfahrzeug 10 entsprechend seiner Ladekapazität mit mehreren Kraftfahrzeugen 12 zu beladen, muss zunächst die obere Auflageebene 22 für das Befahren der Kraftfahrzeuge 12 zugänglich gemacht werden, was die Absenkung zumindest des hinteren Abschnittes der Auflagefläche 22 erforderlich macht (vgl. Figuren 4a und 4b). Ggf. kann auch der vordere Bereich der Auflagefläche 22 zumindest teilweise abgesenkt werden, wie dies nachfolgend anhand von schematisch angedeuteten Phasen des Beladevorganges unter Bezugnahme auf die Figuren 3a und 3b näher verdeutlicht wird. Außerdem können die Stützenpaare 40 und 42 wahlweise nach hinten geschwenkt werden, um die obere Auflagefläche 22 für das Befahren mit zu ladenden Kraftfahrzeugen 12 zugänglich zu machen, was anhand der Figuren 5a bis 5d beispielhaft verdeutlicht wird.

Die beiden schematischen Seitenansichten der Fig. 3a und der Fig. 3b zeigen eine erste Variante zur Absenkung der oberen Auflagefläche 22 oder Ladeebene des Transportfahrzeuges 10, um das Befahren der Auflagefläche 22 oder Ladeebene mit Kraftfahrzeugen 12 gemäß Fig. 1 zu ermöglichen. Zu diesem Zweck kann die obere Auflagefläche 22 wahlweise entlang der vertikalen vorderen und hinteren Stützenpaare 40 und 42 durch Aktivierung der dort angeordneten Linearantriebe (nicht detaillierter dargestellt) abgesenkt, so dass eine hintere Querkante oder herausziehbare Auffahrrampe 52 an der Hinterseite der oberen Auflagefläche 22 auf der Fahrbahn 50 aufliegen kann bzw. zumindest einen von Rädern der zu beladenden Fahrzeuge 12 überrollbaren Abstand von der Fahrbahn 50 aufweist. Danach kann die Beladung der abgesenkten oberen Auflagefläche 22 durch Befahren der oberen Auflageebene 22 mit einem, zwei oder insgesamt drei Fahrzeugen 12 erfolgen, wonach anschließend die obere Auflageebene 22 mit den darauf befindlichen Fahrzeugen 12 wieder angehoben werden kann, was wiederum mittels der den Stützenpaaren 40 und 42 zugeordneten Linearantriebe erfolgen kann. Diese Linearantriebe können, wie zuvor erwähnt, wahlweise durch Spindelantriebe, hydraulische Antriebe, elektromotorische Antriebe o. dgl. gebildet sein. Nachdem die obere Auflageebene 22 angehoben ist, ist die untere Auflageebene 20 wieder zugänglich, so dass bis zu zwei Fahrzeuge 12 (ggf. auch mehr, wenn diese sehr kompakte Abmessungen aufweisen) auf die untere Auflageebene auffahren können (vgl. Fig. 1). Abschließend können die Fahrzeuge 12 in den jeweils eingenommenen Transportpositionen gegen Wegrollen gesichert, d.h. auf ihren jeweiligen Transportpositionen fixiert werden.

Die Fig. 4 zeigt in zwei weiteren schematischen Seitenansichten (Fig. 4a und Fig. 4b) eine zweite Variante zur Absenkung der oberen Auflagefläche 22 oder Ladeebene des Transportfahrzeuges 10, womit das Befahren der Auflagefläche 22 oder Ladeebene mit Kraftfahrzeugen 12 gemäß Fig. 1 ermöglicht wird. Hierbei wird ein hinterer Bereich 54 der oberen Auflagefläche 22 durch Verschwenken am vorderen Stützenpaar 40 um eine Schwenkachse 56 und durch gleichzeitige Aktivierung der Linearantriebe des hinteren Stützenpaars 42 abgesenkt, so dass eine hintere Querkante oder ausziehbare Auffahrrampe 52 der oberen Auflagefläche 22 auf der Fahrbahn 50 aufliegen kann (vgl. Fig. 4b) oder zumindest einen von den Rädern der zu beladenden Fahrzeuge 12 überrollbaren Abstand von der Fahrbahn 50 aufweist. Danach erfolgt die Beladung der schräg gestellten oberen Auflagefläche 22 durch Befahren der oberen Auflageebene 22 mit einem, zwei oder insgesamt drei Fahrzeugen 12, wonach anschließend das Anheben der oberen Auflageebene 22 mit den darauf befindlichen Fahrzeugen 12 erfolgen kann. Nachdem die obere Auflageebene 22 heckseitig angehoben ist und um die vordere Schwenkachse 56 am vorderen Stützenpaar 40 in die horizontale Lage geschwenkt ist, ist die untere Auflageebene 20 zugänglich gemacht, so dass bis zu zwei Fahrzeuge 12 (ggf. auch mehr, wenn diese sehr kompakte Abmessungen aufweisen) auf die untere Auflageebene 20 auffahren können (Fig. 1). Abschließend können die Fahrzeuge 12 in den jeweils eingenommenen Transportpositionen gegen Wegrollen gesichert, d.h. auf ihren jeweiligen Transportpositionen fixiert werden.

Bei der in Fig. 4 gezeigten Variante des Absenkvorganges des hinteren Auflagenbereichs 54 kann zur Erleichterung des Auffahrens des vordersten Kraftfahrzeugs 12 vorgesehen sein, dass ein das Führerhaus 16 überragender vorderer Abschnitt 58 der oberen Auflagefläche 22, der vor dem vorderen Stützenpaar 40 angeordnet ist und nicht mit nach unten schwenkt bzw. gar nicht mit dem schwenkbaren und/oder absenkbaren Abschnitt der oberen Auflagefläche verbunden ist, zumindest abschnittsweise nach oben geschwenkt werden kann, um eine hier nicht dargestellte, durchgängig geneigte Auffahrfläche zu bilden, wenn die Auflagefläche 22 gemäß Fig. 4b mit ihrem hinteren Bereich 54 zum Boden 50 hin abgesenkt ist. Bei beladenem Transportfahrzeug 10 gemäß Fig. 1 ist dieser vordere Abschnitt 58 wieder in eine horizontale Lage zu bringen, wie dies in den Figuren 1 und 3 bis 5 jeweils gezeigt ist.

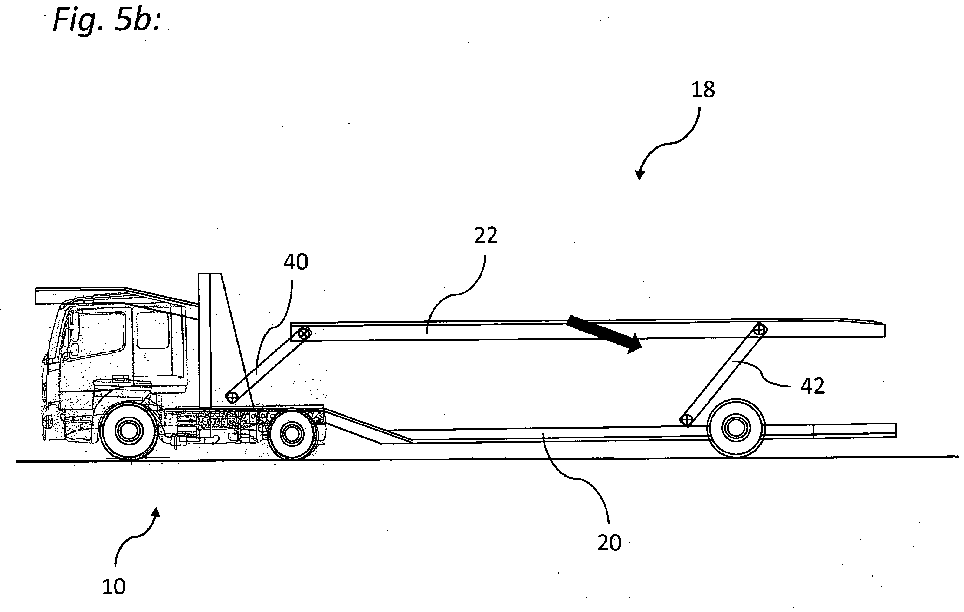

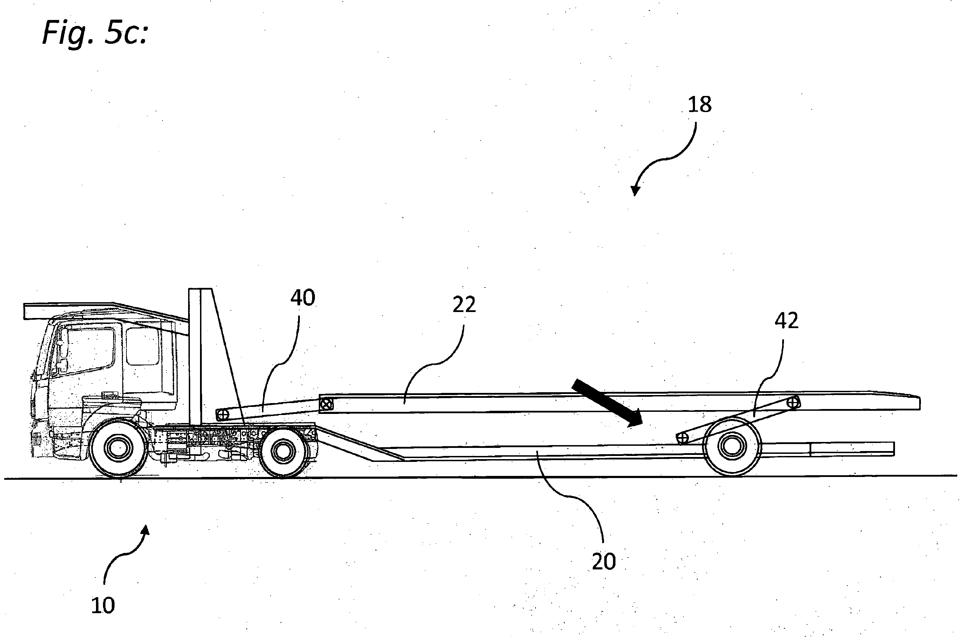

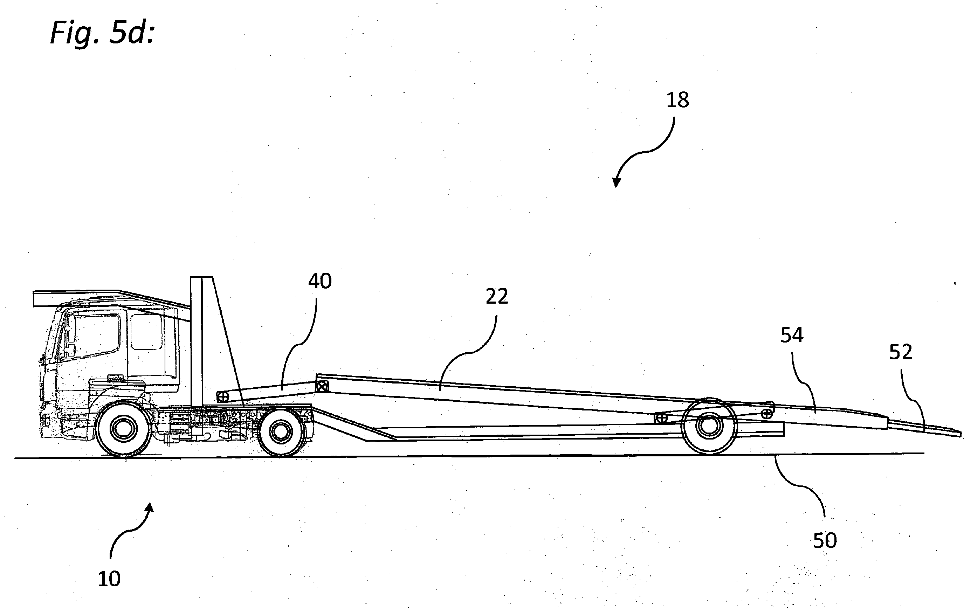

Die Fig. 5 zeigt schließlich in insgesamt vier weiteren schematischen Seitenansichten (Fig. 5a bis Fig. 5d) eine dritte Variante zur Absenkung der oberen Auflagefläche 22 oder Ladeebene des Transportfahrzeuges 10, womit das Befahren der Auflagefläche 22 oder Ladeebene mit Kraftfahrzeugen 12 gemäß Fig. 1 ermöglicht wird. Hierbei werden die beiden Stützenpaare 40 und 42 jeweils nach hinten verschwenkt, was in den aufeinander folgenden Bewegungsphasen gemäß Fig. 5a (nicht verschwenkt) bis Fig. 5d (fast horizontal nach hinten verschwenkt) verdeutlicht ist. Auf diese Weise wird wiederum die obere Auflagefläche 22 mitsamt ihrem hinteren Bereich 54 durch gleichzeitiges und/oder ungefähr paralleles Verschwenken der beiden Stützenpaare 40 und 42 nach hinten abgesenkt, so dass die hintere Querkante oder ausziehbare Auffahrrampe 52 der oberen Auflagefläche 22 auf der Fahrbahn 50 aufliegen kann (vgl. Fig. 5d) oder zumindest einen von den Rädern der zu beladenden Fahrzeuge 12 überrollbaren Abstand von der Fahrbahn 50 aufweist. Die Linearantriebe der Stützenpaare 40 und 42 werden bei dieser Variante des Absenkvorganges normalerweise nicht benötigt. Aus der oberen horizontalen Lage (Fig. 5a) wird die obere Auflagefläche 22 unter Beibehaltung einer ungefähr horizontalen Lage allmählich nach unten und gleichzeitig nach hinten gebracht (Figuren 5b und 5c), bis sie annähernd auf der unteren Auflagefläche 20 aufliegt (Fig. 5d) und mit Kraftfahrzeugen 12 befahren werden kann.

Danach erfolgt die Beladung der abgesenkten oberen Auflagefläche 22 durch Befahren mit einem, zwei oder insgesamt drei Fahrzeugen 12, wonach anschließend das Anheben der oberen Auflageebene 22 mit den darauf befindlichen Fahrzeugen 12 erfolgen kann. Danach ist die untere Auflageebene 20 zugänglich gemacht, so dass bis zu zwei Fahrzeuge 12 (ggf. auch mehr, wenn diese sehr kompakte Abmessungen aufweisen) auf die untere Auflageebene 20 auffahren können (Fig. 1). Abschließend können die Fahrzeuge 12 in den jeweils eingenommenen Transportpositionen gegen Wegrollen gesichert, d.h. auf ihren jeweiligen Transportpositionen fixiert werden.

Die Erfindung wurde unter Bezugnahme auf mehrere bevorzugte und/oder sinnvoll realisierbare Ausführungsformen unter Bezugnahme auf die Figuren 1 bis 5 beschrieben. Damit sind jedoch für einen Fachmann keine Einschränkungen verbunden, die ihn von Abwandlungen oder Änderungen der Erfindung abhalten sollen; auch andere Ausführungsvarianten, bspw. solche mit insgesamt vier oder fünf Achsen oder auch solche mit einer zumindest um einen kleinen Winkel gelenkigen Verbindung zwischen Zugfahrzeug und Transportbereich fallen unter den Schutzbereich der Ansprüche und überschreiben diesen nicht.

### Bezugszeichenliste

- 10: Transportfahrzeug
- 12: Kraftfahrzeug, Kraftfahrzeuge
- 14: Vorderachse
- 16: Führerhaus, Fahrerkabine
- 18: Transportbereich, Ladebereich
- 20: untere Auflagefläche, untere Ladeebene
- 22: obere Auflagefläche, obere Ladeebene
- 24: Hinterachse
- 25: Zwillingsachse, Doppelachse, hintere Zwillings- oder Doppelachse
- 26: Mittelachse
- 28: vorderer Achsabstand (zwischen Vorderachse und Mittelachse)
- 30: hinterer Achsabstand (zwischen Mittelachse und Hinterachse)
- 32: Fahrgestell
- 34: Zugfahrzeug
- 36: Schlafkabine
- 38: vorderer Abschnitt (der unteren Auflageebene)
- 40: vorderes Stützenpaar
- 42: hinteres Stützenpaar
- 44: Vorderrad
- 46: Antriebsrad
- 48: Hinterrad
- 50: Boden, Straßenoberfläche
- 52: Auffahrrampe
- 54: hinterer Bereich, hinterer Auflagebereich (der oberen Auflageebene)
- 56: Schwenkachse (am vorderen Stützenpaar)
- 58: vorderer Abschnitt (der oberen Auflageebene)

## Patentansprüche

1. Transportfahrzeug (10) mit mindestens drei Achsen (14, 24, 26) zur Beförderung von rollbaren Gütern oder Fahrzeugen, insbesondere von Kraftfahrzeugen (12), Personenkraftwagen o. dgl., mit einem frontseitig oberhalb einer lenkbaren Vorderachse (14) angeordneten Führerhaus (16) sowie einem dahinter angeordneten und/oder über das Führerhaus (16) reichenden, mindestens zwei zumindest abschnittsweise übereinander angeordnete Auflageflächen oder Ladeebenen (20, 22) umfassenden, gelenklos mit dem einem Fahrgestell (32) des Zugfahrzeuges (34) verbundenen Transportbereich (18), welchem Transportbereich (18) heckseitig eine lenkbare Hinterachse (24) zur Lastabstützung zugeordnet ist, **dadurch gekennzeichnet, dass** ein Achsabstand (28) zwischen gelenkter Vorderachse (14) und angetriebener Mittelachse (26) ungefähr zwischen zwei und drei Metern beträgt, und dass der Achsabstand (28) der angetriebenen, starren Mittelachse (26) mit mitteldifferential zur lenkbaren Vorderachse (14) weniger als die Hälfte des Achsabstandes (30) zur lenkbaren Hinterachse (24) beträgt.

2. Transportfahrzeug nach Anspruch 1 das einen integrierten Aufbau mit starrer Rahmenverbindungwzwischen dem Fahrgestell (32) des Zugfahrzeuges (34) und sich dahinter anschließendem Transportbereich (18) aufweist.

3. Transportfahrzeug nach einem der Ansprüche 1 bis 2 dessen Führerhaus (16) in Frontlenkerbauweise ausgebildet ist.

4. Transportfahrzeug nach einem der Ansprüche 1 bis 3 dessen Transportbereich (18) in Niederflurbauweise ausgebildet ist.

5. Transportfahrzeug nach Anspruch 4 dessen untere Auflagefläche (20) des sich im hinter der Führerkabine (16) befindlichen Transportbereich (18) zumindest abschnittsweise ungefähr auf demselben Höhenniveau wie die Hinterachse (24) oder darunter befindet.

6. Transportfahrzeug nach einem der Ansprüche 5 dessen obere Auflagefläche (22) des Transportbereichs (18) über mindestens zwei Stützenpaare (40, 42) mit dem Fahrgestell (32) und/oder der unteren Auflagefläche (20) verbunden ist.

7. Transportfahrzeug nach Anspruch 6 bei dem den Stützenpaaren (40, 42) jeweils Linearantriebe zum Heben oder Senken der oberen Auflagefläche (22) zugeordnet sind.

8. Transportfahrzeug nach Anspruch 6 oder 7 dessen Stützenpaare (40, 42) jeweils um horizontale Schwenkachsen zwischen einer ungefähr vertikalen Transport- oder Betriebslage oder -position und einer geneigten oder ungefähr horizontalen Belade- oder Absenklage oder -position verschwenkbar sind.

9. Transportfahrzeug nach einem der Ansprüche dessen Stützenpaare (40, 42) gemeinsam mit der oberen Auflagefläche (22) ungefähr parallelogrammartig beweglich oder verschwenkbar sind.

10. Transportfahrzeug nach einem der Ansprüche 6 bis 9 dessen obere Auflagefläche (22) sich zumindest teilweise über das Führerhaus (16) erstreckt und ist in diesem Bereich (58) geteilt und/oder dort separat schwenkbar ausgebildet ist.

11. Verfahren zum Beladen eines Transportfahrzeugs (10), das mindestens drei Achsen (14, 24, 26) aufweist und zur Beförderung von rollbaren Gütern oder Fahrzeugen, insbesondere von Kraftfahrzeugen (12), Personenkraftwagen o. dgl. vorbereitet und vorgesehen ist, und das ein frontseitig oberhalb einer lenkbaren Vorderachse (14) angeordnetes Führerhaus (16) sowie einen dahinter angeordneten und/oder über das Führerhaus (16) reichenden, mindestens zwei zumindest abschnittsweise übereinander angeordnete Auflageflächen (20, 22) umfassenden Transportbereich (18) aufweist, welcher Transportbereich (18) gelenklos mit einem Fahrgestell (32) des Zugfahrzeugs (34) verbunden ist, und welchem heckseitig eine lenkbare Hinterachse (24) zur Lastabstützung zugeordnet ist, und das eine angetriebene, starre Mittelachse (26) aufweist, deren Achsabstand (28) zur lenkbaren Vorderachse (14) ungefähr zwischen zwei und drei Metern umfasst, wobei der Achsabstand zwischen Vorderachse und Mittelachse, dabei aber weniger als die Hälfte des Achsabstandes (30) zur lenkbaren Hinterachse (24) beträgt, und dessen obere Auflagefläche (22) des Transportbereichs (18) über mindestens zwei Stützenpaare (40, 42) mit dem Fahrgestell (32) und/oder der unteren Auflagefläche (20) verbunden ist, welches Beladeverfahren zumindest die folgenden Schritte umfasst:
- Absenken der oberen Auflagefläche (22) durch Verschwenken der Stützenpaare (40, 42) und/oder durch Aktivierung von Linearantrieben der Stützenpaare (40, 42), wobei eine hintere Querkante der oberen Auflagefläche (22) auf einer Fahrbahn (50) aufliegt oder einen von Rädern der zu beladenden Fahrzeuge (12) überrollbaren Abstand, von der Fahrbahn (50) aufweist,
- Befahren der oberen Auflageebene (22) mit einem, zwei oder insgesamt drei Fahrzeugen (12),
- Anheben der oberen Auflageebene (22) mit den darauf befindlichen Fahrzeugen (12),
- Auffahren von einem oder zwei Fahrzeugen (12) auf die untere Auflageebene (20),
- Sicherung der Fahrzeuge (12) in den jeweils eingenommenen Transportpositionen.

12. Verfahren nach Anspruch 11 bei dem die obere Auflagefläche (22) im hinteren Bereich (54) in Richtung Bodenoberfläche (50) abgesenkt wird, indem sie am vorderen Stützenpaar (40) zumindest verschwenkt und indem das hintere Stützenpaar (42) nach hinten verschwenkt und/oder dessen Linearantrieb aktiviert wird.

13. Verfahren nach Anspruch 14 oder 12, bei dem die Stützenpaare (40, 42) gemeinsam mit der oberen Auflagefläche (22) ungefähr parallelogrammartig verschwenkt werden, wodurch die obere Auflagefläche (22) abgesenkt wird.

## Claims

1. A transport vehicle (10) with at least three axles (14, 24, 26), the transport vehicle (10) being intended for the transport of rollable goods or vehicles, in particular of motor vehicles (12), passenger vehicles, or the like, with a driver's cab (16) arranged at the front end above a steerable front axle (14), as well as a transport area (18) arranged therebehind and/or extending over the driver's cab (16) and comprising at least two support surfaces or loading decks (20, 22), which are, at least in sections, arranged on top of one another, the transport area (18) being connected hingeless to a chassis (32) of the tractor unit (34), with which transport area (18) a steerable rear axle (24) for load support is associated at the rear end, **characterised in that** a centre distance (28) between the steered front axle (14) and the driven centre axle (26) is approximately between two and three metres, and **in that** the centre distance (28) of the driven rigid centre axle (26) with centre differential to the steerable front axle (14) is less than half of the centre distance (30) to the steerable rear axle (24).

2. The transport vehicle as recited in claim 1 that has an integrated structure with a rigid frame connection between the chassis (32) of the tractor unit (34) and the adjoining transport area (18).

3. The transport vehicle as recited in one of the claims 1 to 2, the driver's cab (16) of which is constructed in a cab-over-engine design.

4. The transport vehicle as recited in one of the claims 1 to 3, the transport area (18) of which is constructed in a low-floor design.

5. The transport vehicle as recited in claim 4 of which the lower support surface (20) of the transport area (18) located behind the driver's cab (16) is, at least in sections, situated approximately at the same height level as the rear axle (24) or therebelow.

6. The transport vehicle as recited in one of the claims 1 to 5 of which the upper support surface (22) of the transport area (18) is connected to the chassis (32) and/or to the lower support surface (20) by way of at least two pairs of supports (40, 42).

7. The transport vehicle as recited in claim 6 in which the pairs of supports (40, 42) are each associated with linear actuators for lifting or lowering the upper support surface (22).

8. The transport vehicle as recited in claim 6 or 7 of which the pairs of supports (40, 42) are each swivellable about horizontal swivel axes between an approximately vertical transport state or operating state or transport position or operating position and an inclined or approximately horizontal loading state or lowering state or loading position or lowering position.

9. The transport vehicle as recited in one of the claims 6 to 8 of which the pairs of supports (40, 42) are movable or swivellable in an approximately parallelogram-like manner together with the upper support surface (22).

10. The transport vehicle as recited in one of the claims 6 to 9 of which the upper support surface (22) extends at least partially over the driver's cab (16) and in this area (58) is designed to be divided and/or separately swivellable.

11. A method for loading a transport vehicle (10), which has at least three axles (14, 24, 26), and which is prepared and intended for transporting rollable goods or vehicles, in particular motor vehicles (12), passenger vehicles, or the like, and which has a driver's cab (16) arranged at the front end above a steerable front axle (14), as well as a transport area (18) arranged therebehind and/or extending over the driver's cab (16) and comprising at least two support surfaces (20, 22), which are, at least in sections, arranged on top of one another, which transport area (18) is connected hingeless to a chassis (32) of the tractor unit (34), and with which transport area (18) a steerable rear axle (24) for load support is associated at the rear end, and which transport vehicle (10) has a driven rigid centre axle (26) of which the centre distance (28) to the steerable front axle (14) spans approximately between two and three metres, wherein the centre distance between front axle and centre axle, however, is less than half of the centre distance (30) to the steerable rear axle (24), and of which transport vehicle (10) the upper support surface (22) of the transport area (18) is connected to the chassis (32) and/or to the lower support surface (20) by way of at least two pairs of supports (40, 42), which loading method comprises at least the following steps:
- lowering the upper support surface (22) by swivelling the pairs of supports (40, 42) and/or by activating linear actuators of the pairs of supports (40, 42), wherein a rear transverse edge of the upper support surface (22) rests upon a road surface (50) or is spaced apart from the road surface (50) at such a distance that the wheels of the vehicles (12) to be loaded can roll over it;
- driving one, two, or a total of three vehicles (12) onto the upper support deck (22);
- lifting the upper support deck (22) with the vehicles (12) located thereupon;
- driving one or two vehicles (12) onto the lower support deck (20); and
- securing the vehicles (12) in their particularly assumed transport positions.

12. The method as recited in claim 11 in which the upper support surface (22) is lowered toward the ground surface (50) in the rear area (54) by being at least swivelled at the front pair of supports (40) and by the rear pair of supports (42) being swivelled toward the back and/or by its linear actuator being activated.

13. The method as recited in claim 11 or 12 in which the pairs of supports (40, 42) are swivelled in an approximately parallelogram-like manner together with the upper support surface (22), whereby the upper support surface (22) is lowered.

## Revendications

1. Véhicule de transport (10) muni d'au moins trois essieux (14, 24, 26), destiné au transport de marchandises roulantes ou de véhicules, notamment de véhicules à moteur (12), voitures particulières ou équivalent, avec une cabine de conduite (16) disposée à l'avant au-dessus d'un essieu avant (14) dirigeable ainsi qu'une zone de transport (18) disposée derrière et/ou passant par-dessus la cabine de conduite (16), comprenant au moins deux surfaces portantes ou étages de chargement (20, 22) disposés au moins partiellement l'un au-dessus de l'autre, reliée sans articulation au châssis (32) du véhicule de traction (34), à laquelle zone de transport (18) un essieu arrière dirigeable (24) est attribué à l'arrière pour soutenir des charges, **caractérisé en ce qu'**une distance entre essieux (28) entre l'essieu avant dirigeable (14) et l'essieu médian entraîné (26) mesure approximativement entre deux et trois mètres, et que la distance entre essieux (28) de l'axe médian entraîné et fixe (26) à différentiel central, jusqu'à l'essieu avant dirigeable (14) mesure moins que la moitié de la distance entre essieux (30) jusqu'à l'essieu arrière dirigeable (24).

2. Véhicule de transport selon la revendication 1, qui présente une carrosserie intégrée à liaison de cadre fixe entre le châssis (32) du véhicule de traction (34) et la zone de transport (18) arrivant derrière.

3. Véhicule de transport selon l'une quelconque des revendications 1 à 2, dont la cabine de conduite (16) est agencée de type conduite avancée.

4. Véhicule de transport selon l'une quelconque des revendications 1 à 3, dont la zone de transport (18) est agencée de type plancher surbaissé.

5. Véhicule de transport selon la revendication 4, dont la surface portante inférieure (20) de la zone de transport (18) se trouvant derrière la cabine de conduite (16) se trouve au moins partiellement environ à la même hauteur que l'essieu arrière (24) ou en-dessous.

6. Véhicule de transport selon l'une quelconque des revendications 1 à 5, dont la surface portante supérieure (22) de la zone de transport (18) est reliée au châssis (32) et/ou à la surface portante inférieure (20) par au moins deux paires d'appuis (40, 42).

7. Véhicule de transport selon la revendication 6, dans lequel sont attribués aux paires d'appuis (40, 42) respectives des entraînements linéaires pour soulever ou abaisser la surface portante supérieure (22).

8. Véhicule de transport selon la revendication 6 ou 7, dont les paires d'appuis (40, 42) sont chacune pivotables, autour d'axes de pivotement horizontaux respectifs, pour passer d'une situation ou position de transport ou de fonctionnement approximativement verticale à une situation ou position de chargement ou d'abaissement inclinée ou approximativement horizontale.

9. Véhicule de transport selon l'une quelconque des revendications 6 à 8, dont les paires d'appuis (40, 42) sont, en commun avec la surface portante supérieure (22) mobiles ou pivotables en décrivant approximativement un parallélogramme.

10. Véhicule de transport selon l'une quelconque des revendications 6 à 9, dont la surface portante supérieure (22) s'étend au moins partiellement par-dessus la cabine de conduite (16) et est séparée dans cette zone (58) et/ou y est agencée pivotable séparément.

11. Procédé destiné au chargement d'un véhicule de transport (10), qui présente au moins trois essieux (14, 24, 26) et est destiné et prévu pour le transport de marchandises roulantes ou de véhicules, notamment de véhicules à moteur (12), voitures particulières ou équivalent, et qui présente une cabine de conduite (16) disposée à l'avant au-dessus d'un essieu avant dirigeable (14) ainsi qu'une zone de transport (18) disposée derrière et/ou s'étendant jusqu'au-dessus de ladite cabine de conduite (16) et comprenant au moins deux surfaces portantes (20, 22) disposées au moins partiellement l'une au-dessus de l'autre, ladite zone de transport (18) étant reliée sans articulation à un châssis (32) du véhicule de traction (34), et auquel est attribué à l'arrière un essieu arrière (24) dirigeable pour soutenir les charges, et qui présente un essieu médian (26) fixe et entraîné, dont la distance entre essieux (28) jusqu'à l'essieu avant (14) dirigeable comprend approximativement entre deux et trois mètres, mais la distance entre essieux entre l'essieu avant et l'essieu médian mesurant moins de la moitié de la distance entre essieux (30) jusqu'à l'essieu arrière dirigeable (24), et dont la surface portante supérieure (22) de la zone de transport (18) est reliée au châssis (32) et/ou à la surface portante inférieure (20) par au moins deux paires d'appui (40, 42), ledit procédé de chargement comprenant au moins les étapes suivantes :
- Abaissement de la surface portante supérieure (22) par pivotement des paires d'appuis (40, 42) et/ou par actionnement des entraînements linéaires des paires d'appui (40, 42), un bord transversal arrière de la surface portante supérieure (22) reposant sur une chaussée (50) ou présentant une distance la séparant de la chaussée (50) que des roues des véhicules à charger (12) peuvent franchir en roulant,
- Roulement, sur la surface portante supérieure (22), d'un, de deux ou au total de trois véhicules (12),
- Soulèvement de la surface portante supérieure (22) avec les véhicules s'y trouvant (12),
- Chargement d'un ou de deux véhicules (12) sur la surface portante inférieure (20),
- Arrimage des véhicules (12) dans leur position de transport prise respectivement.

12. Procédé selon la revendication 11, dans lequel la surface portante supérieure (22) est, dans la zone arrière (54), abaissée vers la surface du sol (50), cette surface portante étant au moins pivotée au niveau de la paire d'appui avant (40) et la paire d'appui arrière (42) étant pivotée vers l'arrière et/ou son entraînement linéaire étant actionné.

13. Procédé selon la revendication 11 ou 12, dans lequel les paires d'appuis (40, 42) sont pivotées, en commun avec la surface portante supérieure (22), en décrivant approximativement un parallélogramme, ce qui permet d'abaisser la surface portante supérieure (22).
